# EUROPÄISCHE PATENTSCHRIFT

(11) **EP 1 336 613 B1**
(45) Veröffentlichungstag und Bekanntmachung des Hinweises auf die Patenterteilung: **02.11.2006**
(21) Anmeldenummer: 03001435.1
(22) Anmeldetag: 22.01.2003
(51) Int. Cl.: C07F 7/00, C07F 9/00, C07F 11/00, C07F 15/00, C07F 15/04, C08F 10/00

(54) **Metallkomplexe von Iminohydroxamsäuren**
Metal complexes with iminohydroxamic acid as a ligand
Complexes métalliques à base d'acide iminohydroxamique

(30) Priorität: 13.02.2002 DE 10206116
(43) Veröffentlichungstag der Anmeldung: 20.08.2003
(73) Patentinhaber: Basell Polyolefine GmbH, 50389 Wesseling (DE)
(72) Erfinder: Kristen, Marc Oliver, Dr., 67117 Limburgerhof (DE); Preishuber-Pflügl, Peter, Dr., 67061 Ludwigshafen (DE); Bildstein, Benno, Prof.-Dr., 6020 Innsbruck (AT); Krajete, Alexander, 5020 Salzburg (AT)

(56) Entgegenhaltungen:
- TSUKAHARA ET AL.: "Neutral and Cationic Zirconium Benzyl complexes Containing Bidentate Pyridine-Alkoxide Ligands. Synthesis and Olefin Polymerization Chemistry of (pyCR2O)2Zr(CH2Ph)2 and (pyCR2O)2Zr(CH2Ph)+ Complexes" ORGANOMETALLICS, Bd. 16, 1997, Seiten 3303-3313, XP002260137
- KIM ET AL.: "Synthesis, Structures, Dynamics, and Olefin Polymerizaion Behavior of Group 4 Metal (pyCAr2O)2M(NR2)2 Complexes Containing Bidentate Pyridine-Alkoxide Ancillary Ligands " ORGANOMETALLICS, Bd. 16, 1997, Seiten 3314-3323, XP002260138

## Beschreibung

Die vorliegende Erfindung betrifft Komplexverbindungen der allgemeinen Formel I a und I b, 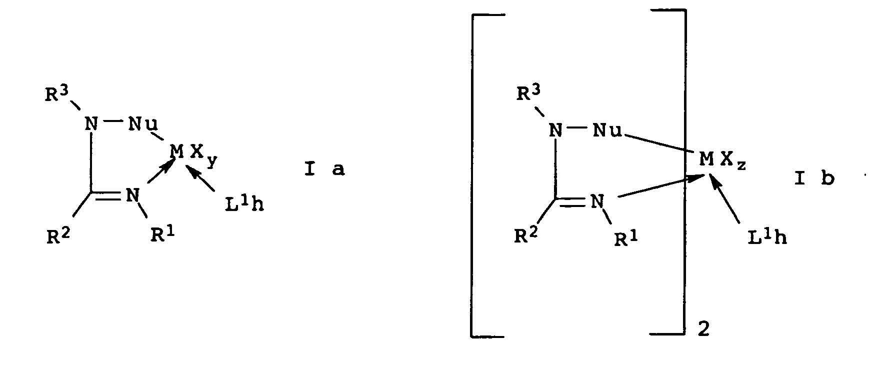 bei denen die Variablen wie folgt definiert sind:
- Nu: ausgewählt aus O, S, N-R⁴, P-R⁴,
- M: ausgewählt aus Ti, Zr, Hf, V, Nb, Ta;
- h: ist eine ganze Zahl von 0 bis 4;
- y: entspricht der Oxidationsstufe von M abzüglich 1;
- z: entspricht der Oxidationsstufe von M abzüglich 2; mit der Maßgabe, dass z größer Null ist
- X: gleich oder verschieden und ausgewählt aus Halogen, C₁-C₆-Alkoxy, Acetylacetonat, N(R⁵R⁶), C₁-C₈-Alkyl, C₃-C₁₂-Cycloalkyl, C₇-C₁₃-Aralkyl oder C₆-C₁₄-Aryl,
- R¹, R⁴: gleich oder verschieden und ausgewählt aus
Wasserstoff,
C₁-C₁₈-Alkyl,
C₂-C₁₈-Alkenyl, mit ein bis 4 isolierten oder konjugierten Doppelbindungen;
C₃-C₁₂-Cycloalkyl,
C₇-C₁₃-Aralkyl,
C₆-C₁₄-Aryl, unsubstituiert oder einfach oder mehrfach gleich oder verschieden substituiert mit
C₁-C₁₈-Alkyl,
C₂-C₁₈-Alkenyl,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR⁵R⁶R⁷ oder O-SiR⁵R⁶R⁷;
fünf- bis sechsgliedrigen stickstoffhaltigen Heteroaryl-resten, unsubstituiert oder einfach oder mehrfach gleich oder verschieden substituiert mit
C₁-C₁₈-Alkyl,
C₂-C₁₈-Alkenyl,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
Si P⁵R⁶R⁷ oder O-SiR⁵R⁶R⁷;
- R²: C₆-C₁₄-Aryl, unsubstituiert oder einfach oder mehrfach gleich oder verschieden substituiert, oder fünf- bis sechsgliedrigen stickstoffhaltigen Heteroarylresten, unsubstituiert oder einfach oder mehrfach gleich oder verschieden substituiert, wobei die Substituenten wie oben stehend definiert sind;
- R³: C₁-C₁₈-Alkyl, C₂-C₁₈-Alkenyl, mit ein bis 4 isolierten oder konjugierten Doppelbindungen, C₃-C₁₂-Cycloalkyl,
C₇-C₁₃-Aralkyl, C₆-C₁₄-Aryl, unsubstituiert oder einfach oder mehrfach gleich oder verschieden substituiert, oder fünf- bis sechsgliedrigen stickstoffhaltigen Heteroarylresten, unsubstituiert oder einfach oder mehrfach gleich oder verschieden substituiert, wobei die Substituenten wie oben stehend definiert sind;
wobei räumlich benachbarte Reste R¹ bis R⁴ miteinander zu einem 5- bis 12-gliedrigen Ring verbunden sein können, der seinerseits Substituenten tragen kann, die ausgewählt sind aus C₁-C₈-Alkyl, C₂-C₈-Alkenyl, mit ein bis 4 isolierten oder konjugierten Doppelbindungen, C₃-C₁₂-Cycloalkyl, C₇-C₁₃-Aralkyl oder C₆-C₁₄-Aryl;
- L¹: ein organischer oder anorganischer Neutralligand,
- R⁵ bis R⁷: gleich oder verschieden und ausgewählt werden aus Wasserstoff, C₁-C₈-Alkyl, C₃-C₁₂-Cycloalkyl, C₇-C₁₃-Aralkyl oder C₆-C₁₄-Aryl.
- R⁵ bis R⁷: gleich oder verschieden und ausgewählt werden aus Wasserstoff, C₁-C₈-Alkyl, C₃-C₁₂-Cycloalkyl, C₇-C₁₃-Aralkyl oder C₆-C₁₄-Aryl

Weiterhin betrifft die vorliegende Erfindung ein Verfahren zur Polymerisation von Olefinen unter Verwendung von Komplexverbindungen der allgemeinen Formeln I a oder I b.

Polymere und Copolymere von Olefinen sind wirtschaftlich von großer Bedeutung, weil die Monomere in großen Mengen leicht zugänglich sind und weil sich die Polymere durch Variation des Herstellverfahrens oder der Verarbeitungsparameter in weiten Bereichen variieren lassen. Besondere Aufmerksamkeit beim Herstellverfahren gilt dabei dem verwendeten Katalysator. Neben Ziegler-Natta-Katalysatoren sind verschiedenartige Single-Site-Katalysatoren von wachsender Bedeutung, wobei als Zentralatome neben Zr wie beispielsweise in Metallocenkatalysatoren (H.-H. Brintzinger *et al*., *Angew. Chem.* **1995**, *107,* 1255) auch Ni oder Pd (WO 96/23010) oder Fe und Co (z.B. WO 98/27124) genauer untersucht worden sind. Die Komplexe von Ni, Pd, Fe und Co werden auch als Komplexe Später Übergangsmetalle bezeichnet.

Metallocenkatalysatoren haben für den großtechnischen Einsatz Nachteile. Die am häufigsten verwendeten Metallocene, das sind Zirkonocene und Hafnocene, sind hydrolyseempfindlich. Außerdem sind die meisten Metallocene empfindlich gegenüber einer Vielzahl von Katalysatorgiften wie beispielsweise Alkoholen, Ethern oder CO, was eine sorgfältige Reinigung der Monomeren bedingt.

Während Ni- oder Pd-Komplexe (WO 96/23010) die Bildung hochverzweigter, kommerziell wenig interessanter Polymere katalysieren, führt die Verwendung von Fe- oder Co-Komplexen zur Bildung von hochlinearem Polyethylen mit sehr geringen Anteilen an Comonomer.

In EP-A 0 874 005 werden weitere polymerisationsaktive Komplexe offengelegt. Es handelt sich bei den Komplexen bevorzugt um Ti-Komplexe mit Salicylaldiminliganden. Auch sie tragen Phenylsubstituenten oder substituierte Phenylsubstituenten am Aldimin-Stickstoffatom (Seite 18-23), oder aber das Aldimin-Stickstoffatom ist in einen 6-gliedrigen Ring eingebaut (Seite 31-32). Sie erzeugen aber in der Regel niedermolekulare Polyethylene, die als Werkstoffe wenig geeignet sind. Weiterhin ist den in EP-A 0 874 005 offengelegten Liganden gemeinsam, dass das Sauerstoffatom ein Bestandteil phenolischer Systeme ist, was die Auswahl an leicht zugänglichen Ausgangsmaterialien einschränkt.

Wie G.J.P. Britovsek *et al.* in *Angew. Chem.* **1999**, *111,* 448 und *Angew. Chem. Int. Ed. Engl.* **1999**, *38,* 428 zeigen, ist aufgrund der großen kommerziellen Bedeutung von Polyolefinen die Suche nach möglichst vielseitigen polymerisationsaktiven Komplexen auch weiterhin von Bedeutung. Dabei haben Komplexe der sogenannten frühen Übergangsmetalle mit zweizähnigen Liganden besonderes Augenmerk erhalten, beispielsweise Komplexe der allgemeinen Formel A, 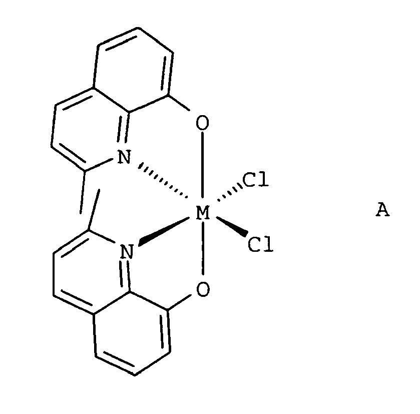 die von X. Bei *et al.* in *Organometallics* **1997**, *16,* 3282 untersucht wurden. Die Aktivitäten der Komplexe mit M = Ti oder Zr und bei der Ethylenpolymerisation waren jedoch zu gering, als dass die Komplexe kommerziell von Interesse sein könnten. T. Tsukahara *et al.* in *Organometallics* **1997**, *16,* 3303 und I. Kim *et al.* in *Organometallics* **1997**, *16,* 3314 haben β-Hydroxypyridylkomplexe der allgemeinen Formel B 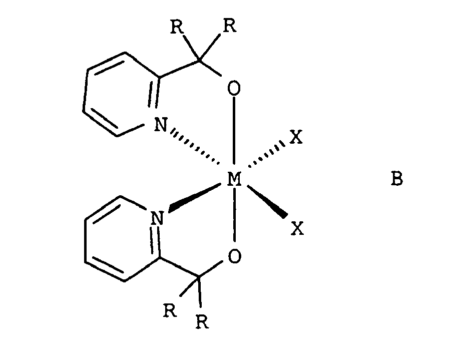 und ihre Aktivität bei der Ethylenpolymerisation untersucht. Wählte man beispielsweise R aus CH₃ oder CF₃ und X Benzyl oder Neopentyl, so konnte bei Aktivierung mit Trispentafluorphenylboran keine oder nur äußerst geringe Polymerisationsaktivität gegenüber Ethylen beobachtet werden. Wählte man hingegen R = para-tert.-Butylphenyl und X Benzyl, so wurde eine geringe Aktivität beobachten, die für kommerzielle Zwecke jedoch zu gering war.

L.H. Biggs et al. stellen in Aust. f. Chem. 1976, 29, 357 Komplexe der allgemeinen Formel C 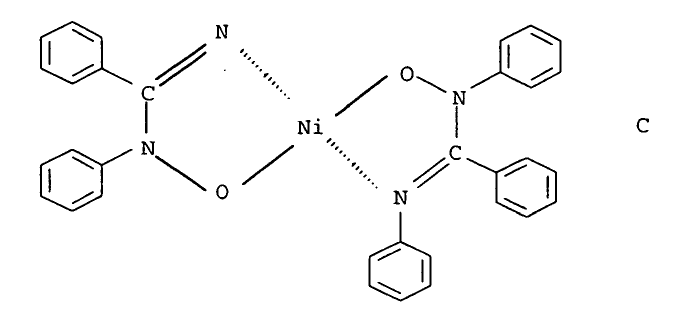 vor und untersuchen sie im Hinblick auf Aktivität gegen Tumoren. Komplexe der Formel C sind polymerisationsinaktiv.

Daher bestand die Aufgabe,
- neue Komplexverbindungen bereitzustellen, die zur Polymerisation von Olefinen zu hochmolekularen Polymeren geeignet sind;
- ein Verfahren zur Herstellung der erfindungsgemäßen Komplexverbindungen bereitzustellen;
- ein Verfahren zur Polymerisation oder Copolymerisation von Olefinen unter Verwendung der erfindungsgemäßen Komplexverbindungen bereitzustellen;
- Trägerkatalysatoren für die Polymerisation von Olefinen sowie ein Verfahren zur Herstellung der erfindungsgemäßen Trägerkatalysatoren unter Verwendung der erfindungsgemäßen Komplexverbindungen bereitzustellen;
- mit den erfindungsgemäßen Trägerkatalysatoren Olefine zu polymerisieren und zu copolymerisieren.

Überraschend wurde nun gefunden, dass die Aufgabe mit Hilfe Komplexverbindungen gelöst werden kann, die die eingangs definierten Strukturen der allgemeinen Formel I a oder I b aufweisen.

In Formel I sind die Variablen wie folgt definiert:
- Nu: ausgewählt aus O, S oder N-R⁴ oder P-R⁴, wobei Sauerstoff und N-R⁴ bevorzugt sind;
- M: ausgewählt aus Ti, Zr, Hf, V, Nb oder Ta, in der Wertigkeit von +2 bis +5; bevorzugt sind Ti oder Zr in der Wertigkeit +4 und besonders bevorzugt ist Zr;
- h: ist eine ganze Zahl von 0 bis 4; im Falle von M = Ti oder Zr oder Hf ist h bevorzugt 0;
- y: entspricht der Oxidationsstufe von M abzüglich 1,
- z: entspricht der Oxidationsstufe von M abzüglich 2, wobei es sich bei M um ein Metall in der höchsten Oxidationsstufe handeln kann, aber nicht handeln muss und wobei z größer als Null ist;
- X: gleich oder verschieden und ausgewählt aus
- Halogen, wie Fluor, Chlor, Brom oder Iod, bevorzugt sind Chlor oder Brom und besonders bevorzugt ist Chlor;
- C₁-C₆-Alkoxy, wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
- Acetylacetonat,
- N(R⁵R⁶), wobei R⁵ und R⁶ wie untenstehend definiert sind, besonders bevorzugt N(CH₃)₂, N(CH₃)(C₆H₅) und N(CH₂)₄
- C₁-C₈-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- C₃-C₁₂-Cycloalkyl, wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇-C₁₃-Aralkyl bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl; oder
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevor zugt Phenyl, 1-Naphthyl und 2-Naphthyl, besonders bevorzugt Phenyl.

Bevorzugt ist X Halogen.

R¹ und R⁴ sind gleich oder verschieden und ausgewählt aus
- Wasserstoff,
- C₁-C₁₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl n-Octyl, n-Decyl, n-Dodecyl oder n-Octadecyl; bevorzugt C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl oder n-Decyl, besonders bevorzugt C₁-C₄-Alkyl wie Methyl, Ethyl, n-Propyl, iso-Propyl, n-Butyl, iso-Butyl, sec.-Butyl und tert.-Butyl;
- C₂-C₁₈-Alkenyl mit ein bis 4 isolierten oder konjugierten Doppelbindungen, beispielsweise Vinyl, 1-Allyl, 3-Allyl, ω-Butenyl, ω-Pentenyl, ω-Hexenyl, 1-cis-Buta-1,3-dienyl oder 1-cis -Hexa-1,5-dienyl.
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
- C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, gleich oder verschieden substituiert durch eine oder mehrere
   - C₁-C₁₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl n-Octyl, n-Decyl, n-Dodecyl oder n-Octadecyl; bevorzugt C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl oder n-Decyl, besonders bevorzugt C₁-C₄-Alkyl wie Methyl, Ethyl, n-Propyl, iso-Propyl, n-Butyl, iso-Butyl, sec.-Butyl und tert.-Butyl;
   - C₂-C₁₈-Alkenyl mit ein bis 4 isolierten oder konjugierten Doppelbindungen, beispielsweise Vinyl, 1-Allyl, 3-Allyl, ω-Butenyl, ω-Pentenyl, ω-Hexenyl, 1-cis-Buta-1,3-dienyl oder 1-cis -Hexa-1,5-dienyl.
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, ortho-Kresyloxy, meta-Kresyloxy, para-Kresyloxy, α-Naphthoxy, β-Naphthoxy oder 9-Anthryloxy;
   - Silylgruppen SiR⁵R⁶R⁷, wobei R⁵ bis R⁷ unabhängig voneinander aus Wasserstoff, C₁-C₈-Alkylgruppen, Benzylresten und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR⁵R⁶R⁷, wobei R⁵ bis R⁷ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-*para*-xylylsilyloxygruppe; besonders bevorzugt sind die Trimethylsilyloxygruppe und die tert.-Butyldimethylsilyloxygruppe;
- fünf- bis sechsgliedrigen stickstoffhaltigen Heteroarylresten wie beispielsweise *N*-Pyrrolyl, Pyrrol-2-yl, Pyrrol-3-yl, *N-*Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und N-Carbazolyl;
- fünf- bis sechsgliedrigen stickstoffhaltigen Heteroarylresten wie beispielsweise *N*-Pyrrolyl, Pyrrol-2-yl, Pyrrol-3-yl, *N-*Imidazolyl, 2-Imidazolyl, 4-Imidazolyl, 1,2,4-Triazol-3-yl, 1,2,4-Triazol-4-yl, 2-Pyridyl, 3-Pyridyl, 4-Pyridyl, 3-Pyridazinyl, 4-Pyridazinyl, 2-Pyrimidinyl, 4-Pyrimidinyl, 5-Pyrimidinyl, N-Indolyl und N-Carbazolyl, gleich oder verschieden einfach oder mehrfach substituiert mit
   - C₁-C₁₈-Alkylgruppen, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl n-Octyl, n-Decyl, n-Dodecyl oder n-Octadecyl; bevorzugt C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl oder n-Decyl, besonders bevorzugt C₁-C₄-Alkyl wie Methyl, Ethyl, n-Propyl, iso-Propyl, n-Butyl, iso-Butyl, sec.-Butyl und tert.-Butyl;
   - C₂-C₁₈-Alkenyl mit ein bis 4 isolierten oder konjugierten Doppelbindungen, beispielsweise Vinyl, 1-Allyl, 3-Allyl, ω-Butenyl, ω-Pentenyl, ω-Hexenyl, 1-cis-Buta-1,3-dienyl oder 1-cis -Hexa-1,5-dienyl.
   - C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
   - C₇-C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
   - C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - Halogen, beispielsweise Fluor, Chlor, Brom oder Iod, besonders bevorzugt Fluor oder Chlor;
   - C₁-C₆-Alkoxygruppen wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
   - C₆-C₁₄-Aryloxygruppen wie Phenoxy, *ortho*-Kresyloxy, *meta-*Kresyloxy, *para*-Kresyloxy, α-Naphthoxy, β-Naphthoxy oder 9-Anthryloxy;
   - Silylgruppen SiR⁵R⁶R⁷, wobei R⁵ bis R⁷ unabhängig voneinander aus Wasserstoff, C₁-C₈-Alkylgruppen, Benzylresten und C₆-C₁₄-Arylgruppen ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-para-xylylsilylgruppe; besonders bevorzugt sind die Trimethylsilylgruppe und die tert.-Butyldimethylsilylgruppe;
   - Silyloxygruppen OSiR⁵R⁶R⁷, wobei R⁵ bis R⁷ unabhängig voneinander aus Wasserstoff, C₁-C₈-Alkylgruppen, Benzylresten und C₆-C₁₄-Arylgruppen ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxyund die Tri-para-xylylsilyloxygruppe; besonders bevorzugt sind die Trimethylsilyloxygruppe und die tert.-Butyldimethylsilyloxygruppe;

In einer besonders bevorzugten Ausführungsform sind R¹ oder R⁴ ungleich Wasserstoff.
- R²: C₆-C₁₄-Aryl, unsubstituiert oder einfach oder mehrfach gleich oder verschieden substituiert, oder fünf- bis sechsgliedrigen stickstoffhaltigen Heteroarylresten, unsubstituiert oder einfach oder mehrfach gleich oder verschieden substituiert, wobei die Substituenten wie oben stehend definiert sind.
- R³ und R⁸: gleich und verschieden und gewählt aus C₁-C₁₈-Alkyl, C₂-C₁₈-Alkenyl, mit ein bis 4 isolierten oder konjugierten Doppelbindungen, C₃-C₁₂-Cycloalkyl, C₇-C₁₃-Aralkyl, C₆-C₁₄-Aryl, unsubstituiert oder einfach oder mehrfach gleich oder verschieden substituiert, oder fünf- bis sechsgliedrigen stickstoffhaltigen Heteroarylresten, unsubstituiert oder einfach oder mehrfach gleich oder verschieden substituiert, wobei die Substituenten wie oben stehend definiert sind.

In einer besonders bevorzugten Ausführungsform ist R¹ gewählt aus 2,6-Diisopropylphenyl oder 2,6-Dimethylphenyl oder ortho-Biphenyl.

In einer besonders bevorzugten Ausführungsform ist R² Phenyl.
- L¹: wird gewählt aus anorganischen oder organischen Neutralliganden, beispielsweise aus Phosphanen der Formel (R⁸)ₓPH₃₋ₓ oder Aminen der Formel (R⁸)ₓNH₃₋ₓ, wobei x eine ganze Zahl von 0 und 3 bedeutet. Aber auch Ether (R⁸)₂O wie beispielsweise Dialkylether, z.B. Diethylether, oder cyclische Ether, wie beispielsweise Tetrahydrofuran, H₂O, Alkohole (R⁸)OH wie Methanol oder Ethanol, Pyridin, Pyridinderivate der Formel C₅H₅₋ₓ(R⁸)ₓN, wie beispielsweise 2-Picolin, 3-Picolin, 4-Picolin, 2,3-Lutidin, 2,4-Lutidin, 2,5-Lutidin, 2,6-Lutidin oder 3,5-Lutidin, CO, C₁-C₁₂-Alkylnitrile oder C₆-C₁₄-Arylnitrile sind geeignet, wie Acetonitril, Propionitril, Butyronitril oder Benzonitril. Weiterhin können einfach oder mehrfach ethylenisch ungesättigte Doppelbindungssysteme als Ligand dienen, wie Ethenyl, Propenyl, cis-2-Butenyl, trans-2-Butenyl, Cyclohexenyl oder Norbornenyl.

In einer besonderen Ausführungsform können benachbarte Reste R¹ bis R⁴ der Komplexverbindungen der allgemeinen Formeln I a oder I b miteinander zu einem 5- bis 12-gliedrigen Ring verbunden sein. Beispielsweise können R³ und R⁴ zusammen sein: -(CH₂)₃- (Trimethylen), -(CH₂)₄- (Tetramethylen), -(CH₂)₅- (Pentamethylen), -(CH₂)₆₋(Hexamethylen), -CH₂-CH=CH-, -CH₂-CH=CH-CH₂-, -CH=CH-CH=CH-, -O-CH₂-O-, -O-CHMe-O-, -O-CH-(C₆H₅)-O-, -O-CH₂-CH₂-O-, -O-CMe₂-O-, -NMe-CH₂-CH₂-NMe-, -NMe-CH₂-NMe- oder -O-SiMe₂-O- mit Me = CH₃. In einer weiteren Ausführungsform der vorliegenden Erfindung sind R¹ und R⁶ miteinander zu einem 5- bis 12-gliedrigen Ring verbunden.

In einer anderen bevorzugten Ausführungsform sind L¹ und X miteinander verbunden; so können L¹ und X beispielsweise zusammen ein Allylanion oder ein 2-Methylallylanion bilden.

Die für das erfindungsgemäße Verfahren benötigten Komplexverbindungen sind synthetisch gut zugänglich.

Zur Synthese der erfindungsgemäßen Komplexverbindungen der allgemeinen Formel I a oder I b geht man im Allgemeinen von einem protonierten Liganden der allgemeinen Formel II aus, 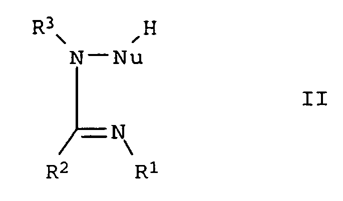 in dem die Variablen wie vorstehend definiert sind.

Die protonierten Liganden der allgemeinen Formel II werden zunächst mit Hilfe einer Base deprotoniert und anschließend mit Metallverbindungen der allgemeinen Formel MX_{y+1} umgesetzt.

Als Base können die in der Metallorganischen Chemie gängigen Metallalkyle verwendet werden wie beispielsweise Methyllithium, Ethyllithium, n-Butyllithium, sec-Butyllithium, tert.-Butyllithium oder Hexyllithium, weiterhin Grignard-Verbindungen wie beispielsweise Ethylmagnesiumbromid, weiterhin Lithiumamid, Natriumamid, Kaliumamid, Kaliumhydrid oder Lithiumdiisopropylamid ("LDA"). Als Lösemittel haben sich Lösemittel wie Toluol, ortho-Xylol, meta-Xylol, para-Xylol, Ethylbenzol oder Mischungen derselben als geeignet erwiesen, des Weiteren nichtcyclische oder cyclische Ether wie 1,2-Dimethoxyethan, Tetrahydrofuran oder Diethylether.

Diese Deprotonierung ist im Allgemeinen nach einigen Stunden beendet, sinnvoll ist eine Reaktionsdauer von 2 bis 10 Stunden, bevorzugt sind 3 bis 5 Stunden. Die Temperaturbedingungen sind im Allgemeinen unkritisch, eine Durchführung bei Temperaturen von -90°C bis -20°C hat sich als bevorzugt erwiesen.

Wählt man die Metallverbindung MX_{y+1} mit X aus C₁-C₈-Alkyl, C₃-C₁₂-Cycloalkyl, C₇-C₁₃-Aralkyl oder C₆-C₁₄-Aryl, so kann auf den Einsatz einer Base im Allgemeinen verzichtet werden.

Der deprotonierte Ligand und die Metallverbindung der allgemeinen Formeln MX_{y+1} werden anschließend miteinander umgesetzt.

Dabei kann MX_{y+1} optional durch Neutralliganden stabilisiert werden. Als Neutralliganden bieten sich die gängigen Liganden der Komplexchemie an, wie beispielsweise cyclische und nichtcyclische Ether, Amine, Diamine, Nitrile, Isonitrile oder Phosphine. Besonders bevorzugt sind Diethylether, Tetrahydrofuran, 1,2-Dimethoxyethan, Tetramethylethylendiamin, Acetonitril oder Triphenylphosphan.

Die Bedingungen für die Umsetzung sind an sich unkritisch; üblicherweise mischt man den deprotonierten Liganden II und MX_{y+1} miteinander in einem geeigneten Lösemittel wie Benzol, Toluol, Ethylbenzol, ortho-Xylol, meta-Xylol oder para-Xylol, Chlorbenzol, Cyclohexan, Methylenchlorid oder einem Gemisch derselben. Als Temperaturbereich kommen -100°C bis +150°C in Frage, bevorzugt -78°C bis +100°C. Dabei sollte die Reaktionstemperatur den Schmelzpunkt des Lösemittels nicht unterschreiten; Temperaturen oberhalb des Siedepunkts des betreffenden Lösemittels lassen sich in Autoklavenversuchen verwirklichen. Wichtig ist, dass man die Umsetzung unter Ausschluss von Sauerstoff und Feuchtigkeit durchführt.

Als Molverhältnisse zwischen Ligand und M sind solche im Bereich von 5:1 bis 1:5 geeignet. Da jedoch die Liganden der allgemeinen Formel II die aufwändiger zugänglichen Reaktionspartner sind, sind Molverhältnisse Ligand : M im Bereich von 1:1 bis 1:3 bevorzugt, besonders bevorzugt sind stöchiometrische Mengen.

Wünscht man jedoch Verbindungen der allgemeinen Formel I b zu erhalten, so sind Molverhältnisse Ligand : M von 2:1 bis 4:1 bevorzugt.

Die Reinigung der erfindungsgemäßen Komplexverbindungen der allgemeinen Formel I a und I b gelingt durch die in der metallorganischen Chemie üblichen Methoden, wobei Kristallisation und Ausfällen besonders bevorzugt ist, weiterhin sind Filtrationen über Filterhilfsmittel wie beispielsweise Celite^{®} geeignet.

Die Herstellung der protonierten Liganden der allgemeinen Formel II ist an sich bekannt und gelingt besonders gut durch Umsetzung eines Amides der allgemeinen Formel III, 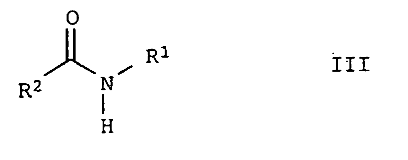 das ein acides α-H-Atom am Stickstoff trägt, mit einem Halogenierungsmittel wie beispielsweise SO₂Cl₂, PCl₃ oder POCl₃ und anschließende Reaktion mit einer nucleophilen Verbindung der allgemeinen Formel IV, 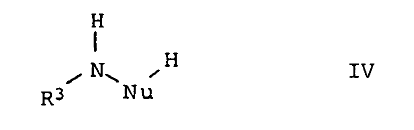 wobei in den Verbindungen III und IV die Variablen wie eingangs definiert sind, in Gegenwart einer Base. Entstehende Nebenprodukte lassen sich durch an sich übliche Reinigungsmethoden abtrennen.

Als Base können vorzugsweise tertiäre Amine eingesetzt werden wie beispielsweise Triethylamin, Diisopropylethylamin oder Pyridin. Als Lösemittel haben sich Lösemittel wie Alkohole oder chlorierte Kohlenwasserstoffe wie beispielsweise Methylenchlorid oder Chloroform oder Mischungen derselben als geeignet erwiesen, des Weiteren nichtcyclische oder cyclische Ether wie 1,2-Dimethoxyethan, Tetrahydrofuran oder Diethylether.

Diese Reaktion ist im Allgemeinen nach einigen Minuten bis zu wenigen Stunden beendet, sinnvoll ist eine Reaktionsdauer von 30 Minuten bis 10 Stunden, bevorzugt sind 1 bis 5 Stunden. Die Temperaturbedingungen sind im Allgemeinen unkritisch, eine Durchführung bei Temperaturen von -90°C bis +30°C, in Ausnahmen bis 50°C hat sich als bevorzugt erwiesen.

Bevorzugt ist, dass man die Umsetzung unter Ausschluss von Sauerstoff und Feuchtigkeit durchführt.

Als Molverhältnisse zwischen III und IV sind solche im Bereich von 5:1 bis 1:5 geeignet, bevorzugt sind Molverhältnisse III : IV im Bereich von 3:1 bis 1:3, besonders bevorzugt sind stöchiometrische Mengen.

Säureamide der allgemeinen Formel III lassen sich nach allgemein bekannten Amidierungsreaktionen erhalten, beispielsweise durch Umsetzung von Carbonsäuren oder deren Estern, Carbonsäurechloriden oder Carbonsäureanhydriden mit Aminen, gegebenenfalls in Gegenwart eines Kupplungsreagenzes oder einer Base.

Es wurde gefunden, dass die erfindungsgemäßen Komplexe der allgemeinen Formel I a
oder I b geeignet sind, um Olefine zu polymerisieren. Besonders gut polymerisieren und copolymerisieren sie Ethylen und Propylen zu hochmolekularen Polymeren. Komplexe der allgemeinen Formel I b sind chiral, sie können bei der Polymerisation isotaktisches Polypropylen liefern.

Damit die erfindungsgemäßen Komplexe der allgemeinen Formeln I a oder I b katalytisch aktiv sind, müssen sie aktiviert werden. Geeignete Aktivatoren für die Komplexverbindungen, in denen M gewählt wird aus Ti, Zr, Hf, V, Nb oder Ta sind ausgewählte Aluminium- oder Bor-Verbindungen mit elektronenziehenden Resten (z.B. Trispentafluorphenylboran, Trispentafluorphenylaluminium, N,N-Dimethylanilinium-tetrakis-pentafluorphenylborat, Trin-butylammonium-tetrakis-pentafluorphenylborat, N,N-Dimethylanilinium-tetrakis-(3,5-bisperfluormethyl)-phenylborat, Tri-n-butylammonium-tetrakis-(3,5-bisperfluormethyl)-phenylborat sowie Tritylium-tetrakispentafluorphenylborat). Bevorzugt sind Dimethylanilinium-tetrakis-pentafluorphenylborat, Tritylium-tetrakispentafluorphenylborat sowie Trispentafluorphenylboran.
Verwendet man Bor- oder Aluminiumverbindungen als Aktivatoren für die erfindungsgemäßen metallorganischen Verbindungen der allgemeinen Formel I a oder I b, so setzt man sie im Allgemeinen in einem molaren Verhältnis von 1 : 10 bis 10 : 1, bezogen auf M, ein; bevorzugt 1 : 2 bis 5 : 1 und besonders bevorzugt in stöchiometrischen Mengen.

Eine andere geeignete Klasse von Aktivatoren sind Aluminoxane. Die Struktur der Aluminoxane ist nicht genau bekannt. Es handelt sich bei ihnen um Produkte, die durch vorsichtige partielle Hydrolyse von Aluminiumalkylen erhalten werden (s. DE-A 30 07 725). Diese Produkte liegen nicht rein vor, sondern als Gemische von offenkettigen und cyclischen Strukturen des Typs V a und V b. Diese Gemische liegen vermutlich in einem dynamischen Gleichgewicht zueinander vor.

In Formel V a und V b sind die Reste R^{m} unabhängig voneinander 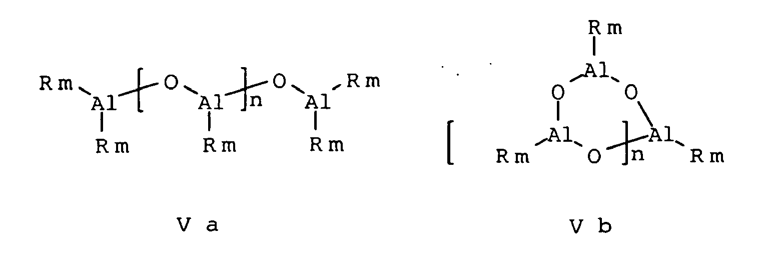
- C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt ist Methyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl, oder
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl; und

- n: ist eine ganze Zahl von 0 bis 40, bevorzugt von 1 bis 25 und besonders bevorzugt von 2 bis 22.

In der Literatur werden auch käfigartige Strukturen für Aluminoxane diskutiert (Y. Koide, S.G. Bott, A.R. Barron *Organometallics* **1996**, *15*, 2213-26; A.R. Barron *Macromol. Symp.* **1995**, *97*, 15-25). Unabhängig davon, wie die Struktur der Aluminoxane tatsächlich aussieht, sind sie als Aktivatoren der erfindungsgemäßen Metallkomplexe der allgemeinen Formeln I a oder I b geeignet.

Gemische verschiedener Aluminoxane sind in den Fällen besonders bevorzugte Aktivatoren, in denen in einer Lösung eines Paraffins, beispielsweise n-Heptan oder Isododekan, polymerisiert wird. Eine besonders bevorzugtes Gemisch ist das kommerziell bei der Firma Witco GmbH erhältliche CoMAO mit einer Formel von [(CH₃)_{0,9}(iso-C₄H₉)_{0,1}AlO]ₙ.

Um die Komplexverbindungen der allgemeinen Formel I a oder I b mit Aluminoxanen zu aktivieren, ist im Allgemeinen ein Überschuss von Aluminoxan, bezogen auf M, notwendig. Sinnvolle Molverhältnisse M : Al liegen im Bereich von 1 : 10 bis 1 : 10.000, bevorzugt 1: 50 bis 1 : 1000 und besonders bevorzugt 1: 100 bis 1:500.

Der gewählte Komplex der allgemeinen Formeln I a oder I b und der Aktivator bilden zusammen ein Katalysatorsystem.

Durch Zugabe von weiterem Aluminiumalkyl der allgemeinen Formel Al(R^{m})₃ oder Aluminoxanen kann die Aktivität des erfindungsgemäßen Katalysatorsystems erhöht werden; Aluminiumalkyle der allgemeinen Formel Al(R^{m})₃ oder Aluminoxane können auch als Molmassenregler wirken. Ein weiterer effektiver Molmassenregler ist Wasserstoff. Besonders gut kann man die Molmasse durch die Reaktionstemperatur und den Druck regeln. Für den Fall, dass die Verwendung einer Bor-Verbindung wie oben beschrieben gewünscht ist, ist die Zugabe eines Aluminiumalkyls der allgemeinen Formel Al(R^{m})₃ besonders bevorzugt.

Einige Komplexe der allgemeinen Formel I a lassen sich durch Ethylen aktivieren. Die Leichtigkeit der Aktivierungsreaktion hängt entscheidend von der Natur des Liganden L¹ ab.

Druck- und Temperaturbedingungen während der Polymerisation können in weiten Grenzen gewählt werden. Als Druck hat sich ein Bereich von 0,5 bar bis 4000 bar als geeignet erwiesen, bevorzugt sind 10 bis 75 bar oder Hochdruckbedingungen von 500 bis 2500 bar.
Als Temperatur hat sich ein Bereich von 0 bis 120°C als geeignet erwiesen, bevorzugt sind 40 bis 100°C und besonders bevorzugt 50 bis 85°C.

Als Monomer sind die folgenden Olefine zu nennen: Ethylen, Propylen, 1-Buten, 1-Penten,
1-Hexen, 1-Octen, 1-Decen oder 1-Undecen, wobei Propylen und Ethylen bevorzugt und Ethylen besonders bevorzugt ist. Weiterhin lässt sich Styrol als Monomer verwenden.

Als Comonomere sind α-Olefine geeignet, wie beispielsweise 0,1 bis 20 mol-% 1-Buten,
1-Penten, 1-Hexen, 4-Methyl-1-Penten, 1-Octen, 1-Decen oder 1-Undecen. Aber auch Isobuten und Styrol sind geeignete Comonomere, des weiteren interne Olefine wie beispielsweise Cyclopenten, Cyclohexen, Norbornen und Norbornadien.

Als Lösemittel haben sich Toluol, ortho-Xylol, meta-Xylol, para-Xylol oder Ethylbenzol als geeignet erwiesen sowie Mischungen derselben, weiterhin - bei Hochdruckbedingungen - überkritisches Ethylen.

Die erfindungsgemäßen Katalysatorsysteme polymerisieren Olefine zu Polyolefinen mit sehr hohem Molekulargewicht.

Die erfindungsgemäßen Katalysatorsysteme lassen sich bei der Polymerisation mit Wasserstoff regeln, d.h. durch Zugabe von Wasserstoff lässt sich das Molekulargewicht der durch das erfindungsgemäße Katalysatorsystem erhältlichen Polymere senken. Bei genügend Wasserstoffzugabe werden Polyolefinwachse erhalten. Die bevorzugte Konzentration des Wasserstoffs ist auch von der Art der verwendeten Polymerisationsanlage abhängt.

Damit die erfindungsgemäßen Katalysatorsysteme in modernen Polymerisationsverfahren wie Suspensionsverfahren, Massepolymerisationsverfahren oder Gasphasenverfahren eingesetzt werden können, ist es notwendig, sie auf einem festen Träger zu immobilisieren. Andernfalls kann es zu Morphologieproblemen des Polymers (Brokken, Wandbeläge, Verstopfungen in Leitungen oder Wärmetauschern) kommen, die zum Abschalten der Anlage zwingen. Ein solches immobilisiertes Katalysatorsystem wird als Katalysator bezeichnet.

Die erfindungsgemäßen Katalysatorsysteme lassen sich auf festen Trägermaterialien abscheiden. Als Trägermaterialien kommen z.B. poröse Metalloxide von Metallen der Gruppen 2 bis 14 oder Mischungen derselben in Frage, weiterhin Schichtsilikate und Zeolithe. Bevorzugte Beispiele für Metalloxide der Gruppen 2 bis 14 sind SiO₂, B₂O₃, Al₂O₃, MgO, CaO und ZnO. Bevorzugte Schichtsilikate sind Montmorrilonite oder Bentonite; als bevorzugter Zeolith wird MCM-41 eingesetzt.

Besonders bevorzugte Trägermaterialien sind sphärische Kieselgele und Alumosilikatgele der allgemeinen Formel SiO₂·a Al₂O₃, wobei a allgemein für eine Zahl im Bereich von 0 bis 2 steht, bevorzugt 0 bis 0,5. Derartige Kieselgele sind im Handel erhältlich, z.B. Silica Gel SG 332, Sylopol^{®} 948 oder 952 oder S 2101 der Fa. W.R. Grace oder ES 70X der Fa. Crosfield.

Als Partikelgröße des Trägermaterials haben sich mittlere Teilchendurchmesser von 1 bis 300 µm bewährt, bevorzugt von 20 bis 80 µm, wobei der Teilchendurchmesser durch bekannte Methoden wie Siebmethoden bestimmt wird. Das Porenvolumen dieser Träger beträgt 1,0 bis 3,0 ml/g, bevorzugt von 1,6 bis 2,2 ml/g und besonders bevorzugt von 1,7 bis 1,9 ml/g. Die BET-Oberfläche beträgt 200 bis 750 m²/g, bevorzugt 250 bis 400 m²/g.

Um dem Trägermaterial anhaftende Verunreinigungen, insbesondere Feuchtigkeit, zu entfernen, können die Trägermaterialien vor der Dotierung ausgeheizt werden, wobei sich Temperaturen von 45 bis 1000°C eignen. Temperaturen von 100 bis 750°C sind für Kieselgele und andere Metalloxide besonders geeignet. Dieses Ausheizen kann über einen Zeitraum von 0,5 bis 24 Stunden erfolgen, wobei Ausheizzeiten von 1 bis 12 Stunden bevorzugt sind. Die Druckbedingungen sind vom gewählten Verfahren abhängig; das Ausheizen kann in einem Festbettverfahren, einem gerührten Kessel oder aber in einem Fließbettverfahren erfolgen. Ganz allgemein kann das Ausheizen bei Atmosphärendruck erfolgen. Vorteilhaft sind jedoch verminderte Drücke von 0,1 bis 500 mbar, besonders vorteilhaft ist ein Bereich von 1 bis 100 mbar und ganz besonders vorteilhaft ein Bereich von 2 bis 20 mbar. Für Fließbettverfahren hingegen empfiehlt es sich, bei leicht erhöhtem Druck zu arbeiten, wobei der Druck in einem Bereich von 1,01 bar bis 5 bar, bevorzugt 1,1 bis 1,5 bar gewählt wird.

Eine chemische Vorbehandlung des Trägermaterials mit einer Alkylverbindung wie Aluminiumalkyl, Lithiumalkyl oder einem Alumoxan ist ebenfalls möglich.

Für eine Polymerisation im Suspensionsverfahren werden solche Suspensionsmittel verwendet, in denen das gewünschte Polymer nicht oder nur in geringem Ausmaß löslich ist, weil andernfalls in den Anlagenteilen, in denen das Produkt vom Suspensionsmittel abgetrennt wird, Beläge des Produkts auftreten und zu wiederholten Abschaltungen und Reinigungsoperationen zwingen. Geeignete Suspensionsmittel sind gesättigte Kohlenwasserstoffe wie beispielsweise Propan, n-Butan, Isobutan, n-Pentan, Isopentan, n-Hexan, Isohexan und Cyclohexan, wobei Isobutan bevorzugt ist.

Druck- und Temperaturbedingungen während der Polymerisation können in weiten Grenzen gewählt werden. Als Druck hat sich ein Bereich von 0,5 bar bis 150 bar als geeignet erwiesen, bevorzugt sind 10 bis 75 bar. Als Temperatur hat sich ein Bereich von 0 bis 120°C als geeignet erwiesen, bevorzugt sind 40 bis 100°C.

Als Monomer sind die folgenden Olefine zu nennen: Ethylen, Propylen, 1-Buten, 1-Penten, 1-Hexen, 1-Octen, 1-Decen oder 1-Undecen. Weiterhin ist Styrol als Monomer zu nennen.

Als Comonomere sind α-Olefine geeignet, wie beispielsweise 0,1 bis 20 mol-% 1-Buten, 1-Penten, 1-Hexen, 4-Methyl-1-Penten, 1-Octen, 1-Decen oder 1-Undecen. Aber auch Isobuten und Styrol sind geeignete Comonomere, des weiteren interne Olefine wie beispielsweise Cyclopenten, Cyclohexen, Norbornen und Norbornadien.

Die erfindungsgemäßen Katalysatoren weisen insgesamt ein verfahrenstechnisch vorteilhaftes Anwendungsprofil auf.

Die erfindungsgemäßen Katalysatoren haben sich weiterhin als Wasserstoff-regelbar erwiesen, d.h. durch Zugabe von Wasserstoff lässt sich das Molekulargewicht der durch die erfindungsgemäßen Katalysatoren erhältlichen Polymere senken. Bei genügend Wasserstoffzugabe werden Wachse erhalten, wobei die erforderliche Wasserstoffkonzentration auch von der Art der verwendeten Polymerisationsanlage abhängt. Bei Wasserstoffzugabe steigt im Allgemeinen die Aktivität der erfindungsgemäßen Katalysatoren.

Die erfindungsgemäßen Katalysatoren können auch gemeinsam mit einem oder mehreren anderen, an sich bekannten Polymerisationskatalysatoren verwendet werden. So können sie beispielsweise zusammen mit
- Ziegler-Natta-Katalysatoren,
- geträgerten Metallocenkatalysatoren der Übergangsmetalle der Gruppen 4 bis 6 des Periodensystems der Elemente,
- Katalysatoren der späten Übergangsmetalle (WO 96/23010),
- Fe- oder Co-Komplexen mit Pyridyldiiminliganden, wie sie in WO 98/27124 offenbart werden,
- oder auch Chromoxidkatalysatoren nach Phillips eingesetzt werden.

Dabei ist es einerseits möglich, verschiedene Katalysatoren miteinander zu mischen und gemeinsam zu dosieren oder cogeträgerte Komplexe auf einem gemeinsamen Träger zu verwenden oder auch verschiedene Katalysatoren getrennt an derselben oder an verschiedenen Stellen in das Polymerisationsgefäß zu dosieren.

Es wurde außerdem gefunden, dass sich die erfindungsgemäßen Komplexe der allgemeinen Formel Ia und I b, in besonderer Weise zur Polymerisation oder Copolymerisation von 1-Olefinen, bevorzugt Ethylen, in Emulsionspolymerisationsverfahren eignen.

Neben anderen 1-Olefinen als Comonomeren, wie beispielsweise Propen, 1-Buten, 1-Hexen, 1-Octen oder 1-Decen, oder vinylaromatischen Verbindungen wie Styrol lassen sich mit Hilfe des erfindungsgemäßen Katalysatorsystems auch polare Comonomere einbauen, wobei 0,1 bis 50 mol-% Comonomer verwendet werden können. Bevorzugt sind
- Acrylate wie Acrylsäure, Acrylsäuremethylester, Acrylsäureethylester, Acrylsäure-(2-ethyl)-hexylester, Acrylsäure-n-butylester oder Acrylsäure-tert.-butylester;
- Methacrylsäure, Methacrylsäuremethylester, Methacrylsäureethylester, Methacrylsäure-n-butylester oder Methacrylsäure-tert.-butylester;
- vinylaromatische Verbindungen wie Styrol;
- Vinylcarboxylate, wobei Vinylacetat besonders bevorzugt ist,
- Ungesättigte Dicarbonsäuren, besonders bevorzugt ist Maleinsäure,
- ungesättigte Dicarbonsäurederivate, besonders bevorzugt sind Maleinsäureanhydrid und Maleinsäurealkylimide wie beispielsweise Maleinsäuremethylimid.

Weiterhin lassen sich Terpolymere mit mindestens 2 der oben aufgeführten Monomeren sowie Ethylen herstellen.

Die Emulsionspolymerisation der 1-Olefine unter Verwendung der erfindungsgemäßen Metallkomplexe der allgemeinen Formel I kann in an sich bekannter Weise durchgeführt werden.

Dabei ist die Reihenfolge der Zugabe der Reagenzien bei der Polymerisation unkritisch. So kann zunächst gasförmiges Monomer auf das Lösemittel aufgepresst bzw. flüssiges Monomer dosiert werden, und anschließend wird das Katalysatorsystem zugegeben. Man kann aber auch die Lösung des Katalysatorsystems zunächst mit weiterem Lösemittel verdünnen und anschließend Monomer zugeben.

Die eigentliche Polymerisation läuft üblicherweise bei einem Mindestdruck von 1 bar, unterhalb dieses Druckes ist die Polymerisationsgeschwindigkeit zu gering. Bevorzugt sind 2 bar und besonders bevorzugt ist ein Mindestdruck von 10 bar.

Als maximaler Druck sind 4000 bar zu nennen; bei höheren Drücken sind die Anforderungen an das Material des Polymerisationsreaktors sehr hoch, und der Prozess wird unwirtschaftlich. Bevorzugt sind 100 bar und besonders bevorzugt sind 50 bar.

Die Polymerisationstemperatur lässt sich in einem weiten Bereich variieren. Als Mindesttemperatur sind 10°C zu nennen, da bei tiefen Temperaturen die Polymerisationsgeschwindigkeit zurückgeht. Bevorzugt ist eine Mindesttemperatur von 40°C und besonders bevorzugt sind 65°C. Als maximale sinnvolle Temperatur sind 350°C zu nennen und bevorzugt 150°C, besonders bevorzugt sind 100°C.

Vor der Polymerisation wird die Komplexverbindung der allgemeinen Formel I a oder I b in einem organischen Lösemittel oder in Wasser gelöst. Durch mehrminütiges Rühren oder Schütteln wird gewährleistet, dass die Lösung klar ist. Dabei kann - je nach Löslichkeit der betreffenden Struktur - die Rührzeit zwischen 1 und 100 Minuten betragen.

Gleichzeitig wird der Aktivator, sofern er notwendig ist, in einer zweiten Portion desselben Lösemittels oder aber in Aceton gelöst.

Als organische Lösemittel eignen sich aromatische Lösemittel wie Benzol, Toluol, Ethylbenzol, ortho-Xylol, meta-Xylol und para-Xylol sowie Mischungen derselben. Des weiteren eignen sich cyclische Ether wie Tetrahydrofuran und Dioxan oder nicht cyclische Ether wie Diethylether, Di-n-butylether, Diisopropylether oder 1,2-Dimethoxyethan. Auch Ketone wie Aceton, Methylethylketon oder Diisobutylketon sind geeignet, desgleichen Amide wie Dimethylformamid oder Dimethylacetamid. Weiterhin sind Gemische dieser Lösemittel untereinander geeignet sowie Gemische dieser Lösemittel mit Wasser oder Alkoholen wie Methanol oder Ethanol.

Bevorzugt sind Aceton und Wasser sowie Mischungen aus Aceton und Wasser, wobei das Mischungsverhältnis beliebig ist. Die Menge des Lösemittels ist ebenfalls unkritisch; es muss jedoch gewährleistet sein, dass sich der Komplex und der Aktivator vollständig lösen können, andernfalls ist mit Aktivitätseinbußen zu rechnen. Der Lösungsvorgang kann gegebenenfalls durch Ultraschallbehandlung beschleunigt werden. Ein optional zuzugebender Emulgator kann in einer dritten Portion des Lösemittels oder auch zusammen mit dem Komplex gelöst werden. Dabei wird die Menge des Emulgators so gewählt, dass das Massenverhältnis zwischen Monomer und Emulgator größer als 1 ist, bevorzugt größer als 10 und besonders bevorzugt größer als 20. Dabei ist es umso günstiger, je weniger Emulgator verwendet werden muss. Die Aktivität in der Polymerisation wird deutlich gesteigert, wenn ein Emulgator zugegeben wird. Dieser Emulgator kann nichtionischer oder ionischer Natur sein.

Gebräuchliche nichtionische Emulgatoren sind z.B. ethoxylierte Mono-, Di- und Tri-Alkylphenole (EO-Grad: 3 bis 50, Alkylrest: C₄-C₁₂) sowie ethoxylierte Fettalkohole (EO-Grad: 3 bis 80; Alkylrest: C₈-C₃₆). Beispiele hierfür sind die Lutensol^{®}-Marken der BASF AG oder die Triton^{®}-Marken der Union Carbide.

Übliche anionische Emulgatoren sind z.B. Alkalimetall- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂-C₁₈) und ethoxylierter Alkylphenole (EO-Grad: 3 bis 50, Alkylrest: C₄-C₁₂), von Alkylsulfonsäuren (Alkylrest: C₁₂-C₁₈) und von Alkylarylsulfonsäuren (Alkylrest: C₉-C₁₈).

Geeignete kationische Emulgatoren sind in der Regel einen C₆-C₁₈-Alkyl-, -Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(*N*,*N*,*N*-Trimethylammonium)ethylparaffinsäureester, *N*-Cetylpyridiniumchlorid, *N*-Laurylpyridiniumsulfat sowie *N*-Cetyl-*N*,*N*,*N*-trimethylammoniumbromid, *N-*Dodecyl*-N,N,N*-trimethylammoniumbromid, *N,N*-Distearyl-*N,N*-dimethylammoniumchlorid sowie das Gemini-Tensid *N*,*N*'-(Lauryldimethyl)ethylendiamindibromid. Zahlreiche weitere Beispiele finden sich in H. Stache, *Tensid-Taschenbuch,* Carl-Hanser-Verlag, München, Wien, **1981** und in McCutcheon's, *Emulsifiers & Detergents,* MC Publishing Company, Glen Rock, **1989**.

Anschließend werden die Komponenten - Komplexverbindung in Lösung, optional die Lösung des Emulgators und optional die Lösung des Aktivators in den Polymerisationsreaktor gegeben. Als Polymerisationsreaktor haben sich gerührte Kessel und Autoklaven sowie Rohrreaktoren als brauchbar erwiesen, wobei die Rohrreaktoren als Schlaufenreaktor ausgeführt werden können.

Das oder die zu polymerisierenden Monomere werden in dem Polymerisationsmedium gemischt. Dabei können als Polymerisationsmedium Wasser oder Gemische von Wasser mit den oben aufgeführten Lösemitteln verwendet werden. Es ist zu beachten, dass der Anteil an Wasser mindestens 50 Vol.-% beträgt, bezogen auf die Gesamtmischung, bevorzugt mindestens 90 Vol.-% und besonders bevorzugt mindestens 95 Vol.-%.

Die Lösungen der Komplexverbindung, gegebenenfalls des Aktivators und gegebenenfalls des Emulgators werden mit dem Gemisch aus Monomer und wässrigem Polymerisationsmedium vereinigt. Die Reihenfolge der Zugabe der verschiedenen Komponenten ist an sich unkritisch. Es ist jedoch erforderlich, dass die Vereinigung der Komponenten so schnell erfolgt, dass keine Kristallisation von intermediär eventuell auftretenden schwer löslichen Komplexverbindungen erfolgt.

Das erfindungsgemäße Verfahren liefert Polyolefine und Olefincopolymere in hohen Ausbeuten, d.h. die Aktivität der erfindungsgemäßen Komplexe unter den Bedingungen der Emulsionspolymerisation ist sehr hoch.

Als Polymerisationsverfahren sind grundsätzlich kontinuierliche und diskontinuierliche Verfahren geeignet. Bevorzugt sind halbkontinuierliche Verfahren (Semi-batch-Verfahren), in denen nach Vermischen aller Komponenten Monomer oder Monomerengemische im Verlauf der Polymerisation nachdosiert werden.

Nach dem erfindungsgemäßen Verfahren werden zunächst wässrige Polymerdispersionen erhalten.

Die mittleren Teilchendurchmesser der Polymerpartikel in den erfindungsgemäßen Dispersionen betragen zwischen 10 und 1000 nm, bevorzugt zwischen 50 und 500 nm und besonders bevorzugt zwischen 70 und 350 nm. Die Verteilung der Teilchendurchmesser kann, muss aber nicht sehr einheitlich sein. Für manche Anwendungen, insbesondere für solche mit hohen Feststoffanteilen (> 55%), sind breite oder bimodale Verteilungen sogar bevorzugt.

Die nach dem erfindungsgemäßen Verfahren erhaltenen Polymere weisen technisch interessante Eigenschaften auf. Im Falle von Polyethylen weisen sie einen hohen Grad der Kristallinität auf, was beispielsweise durch die Anzahl der Verzweigungen nachgewiesen werden kann. Man findet weniger als 100 Verzweigungen, bevorzugt weniger als 50 Verzweigungen pro 1000 C-Atomen des Polymers, bestimmt durch ¹H-NMR und ¹³C-NMR-Spektroskopie.

Die Schmelzenthalpien der nach dem erfindungsgemäßen Verfahren erhältlichen Polyethylene sind größer 100 J/g, bevorzugt größer 140 und besonders bevorzugt größer als 180 J/g, gemessen durch DSC.

Die Molekulargewichtsverteilungen der nach dem erfindungsgemäßen Verfahren erhältlichen Polyethylene sind eng, d.h. die Q-Werte liegen zwischen 1,1 und 3,5 und bevorzugt zwischen 1,5 und 3,1.

Vorteilhaft an den erfindungsgemäßen Dispersionen ist neben dem günstigen Preis aufgrund der billigen Monomeren und Verfahren, dass sie witterungsstabiler als Dispersionen von Polybutadien oder Butadiencopolymeren sind. Gegenüber Dispersionen von Polymeren mit Acrylaten oder Methacrylaten als Hauptmonomer ist die geringere Neigung zum Verseifen als vorteilhaft zu nennen. Weiterhin ist von Vorteil, dass die meisten Olefine leichtflüchtig sind und sich nicht polymerisierte Restmonomere leicht entfernen lassen. Schließlich ist von Vorteil, dass während der Polymerisation keine Molmassenregler wie beispielsweise tert.-Dodecylmercaptan zugegeben werde müssen, die einerseits schlecht abgetrennt werden können und andererseits unangenehm riechen.

Aus den zunächst erhaltenen wässrigen Dispersionen lassen sich durch Entfernen des Wassers und gegebenenfalls des oder der organischen Lösemittel die Polymerpartikel als solche erhalten. Zur Entfernung des Wassers und gegebenenfalls des oder der organischen Lösemittel sind zahlreiche gängigen Verfahren geeignet, beispielsweise Filtrieren, Sprühtrocknen oder Verdampfen. Die so erhaltenen Polymere haben eine gute Morphologie und eine hohe Schüttdichte.

Die Teilchengröße lassen sich mit Lichtstreumethoden bestimmen. Einen Überblick findet man in D. Distler "Wäßrige Polymerdispersionen", Wiley-VCH Verlag, 1. Auflage, 1999, Kapitel 4.

Die erfindungsgemäßen Dispersionen lassen sich in zahlreichen Anwendungen vorteilhaft verwenden, wie beispielsweise Papieranwendungen wie Papierstreicherei oder Oberflächenleimung, weiterhin Anstrichen und Lacken, Bauchemikalien, Klebrohstoffe, Formschäume, Textil- und Lederapplikationen, Teppichrückenbeschichtungen, Matratzen oder pharmazeutischen Anwendungen.

Nachfolgende Arbeitsbeispiele erläutern die Erfindung.

Allgemeine Vorbemerkungen:

Alle Arbeiten wurden, wenn nicht anders beschrieben, unter Ausschluss von Luft und Feuchtigkeit unter Verwendung von Standard-Schlenk-Techniken hergestellt. Geräte und Chemikalien waren entsprechend vorbereitet. Die Polymerviskosität wurde nach ISO 1628-3 bestimmt.

### 1. Darstellung der protonierten Liganden II

### 1.1. Darstellung des protonierten Liganden II.1

Die Synthese der protonierten Liganden wird beispielhaft durch die Beschreibung der Synthese von II.1 erläutert. 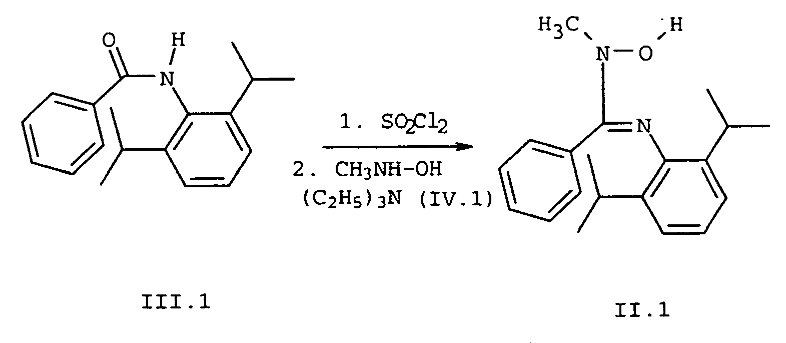
a) 1,9 g N-(2,6-Diisopropylphenyl)benzamid (6,7 mmol) wurden in einem trockenen und mit Argon gespülten Schlenkrohr vorgelegt. Nach Zugabe von 10 ml Thionylchlorid wurde die Reaktionslösung 60 min unter Rückfluss erhitzt. Überschüssiges SOCl₂ wurde am Hochvakuum abgezogen, das zurückbleibende gelbe Öl in 20 ml Methylenchlorid (absolut) gelöst.
b) In ein ausgeheiztes, mit Argon gespültes Schlenkrohr wurde N-Methylhydroxylamin-Hydrochlorid IV.1(0,56 g, 6,7 mmol) vorgelegt und in absolutem Ethanol (50 ml) gelöst. Nach Zugabe von 10 ml Triethylamin (72 mmol) wurde die entstehende Suspension auf - 40 °C gekühlt.

Über einen Tropftrichter wurde das unter a) hergestellte und in Methylenchlorid gelöste Imidchlorid III.1 bei - 40°C innerhalb von 30 min der Lösung b) langsam zugegeben. Nach Anwärmen auf Raumtemperatur wird die Reaktionslösung (gelbe Suspension) 1 h lang gerührt. Anschließende Reaktionskontrolle mittels Dünnschichtchromatographie (Diethylether) zeigte kompletten Umsatz.

Die Reaktionslösung wurde auf Wasser (ca. 100 ml) gegossen, das Produkt mit je 50 ml Diethylether 3 x extrahiert. Die organische Phase wurde mit Na₂SO₄ getrocknet, das Trockenmittel abfiltriert. Nach Abdestillieren des Lösungsmittels am Rotationsverdampfer wurde der entstehende semikristalline Festkörper in geringen Mengen Methylenchlorid gelöst und über Kieselgel filtriert. Die apolare, in Ether sehr gut lösliche Komponente wurde dadurch vollkommen abgetrennt, die polare Komponente wurde am Kieselgel angereichert. Mit ca. 200 ml Ethanol wurde das polare Zielprodukt im Wasserstrahlvakuum unter vermindertem Druck eluiert.

Das Lösungsmittel wurde anschließend am Rotationsverdampfer, dann im Hochvakuum abdestilliert. Der dabei entstehende, weißbeige Festkörper ergab - in Ethanol gelöst - mit FeCl₃ eine tiefviolett gefärbte Lösung, ein Indiz für das Vorliegen eines Hydroxamsäure-Derivats. II.1 konnte durch Festphasenextraktion (stationäre Phase: Kieselgel 60 von Merck KGaA; Laufmittel 1: Diethylether zur Elution der Verunreinigungn, Laufmittel 2: Etanol zur Elution von II.1) in hoher Reinheit erhalten werden.
Ausbeute: 0,83 g (40 %), Summenformel: C₂₀H₂₆N₂O, Farbe: weißbeige 1H-NMR (CDCl₃): 0,96 (6H, d, CH(CH₃)₂, J = 6,6 Hz), 1,09 (6H, d, CH-(CH₃)₂, J = 6,2 Hz), 3.18 (2H, sept, 2 x CH(CH₃)₂), 3,47 (3H, s, N-CH₃), 6.95 (2H, pseudo-d, Phenyl), 7,01 - 7,12 (3H, m, Phenyl), 7,17 - 7,25 (3H, m, Phenyl)
13C-NMR (CDCl₃) : 21.9, 25,4 (CH(CH₃)₂), 28,2 (CH(CH₃)₂), 43,7 (N-CH₃), 123,2, 127,3, 127,8, 128,2, 128,9, 130,1 (C-Phenyl), 131,9 (quartäres C, Phenyl), 146,2 (C=N-C, quartäres C, Phenyl), 149,1 (C=N)
IR (KBr, cm⁻¹) : 3056 (w), 2962 (m), 2869 (m), 1630 (vs), 1586 (m), 1505 (m), 1470 (s), 1445 (m), 1432 (m), 1383 (m), 1324 (m), 1225 (m), 1187 (s), 1162 (m), 1105 (s), 1077 (w), 1044 (m), 971 (m), 917 (w), 807 (s), 780 (s), 758 (s), 700 (s)
MS (FAB): [M + H]⁺ (FAB) = 311,2 m/z

### 1.2. Darstellung des protonierten Liganden II.2

### Beispiel 1.1 wurde wiederholt, aber unter Verwendung des Säureamids III.2

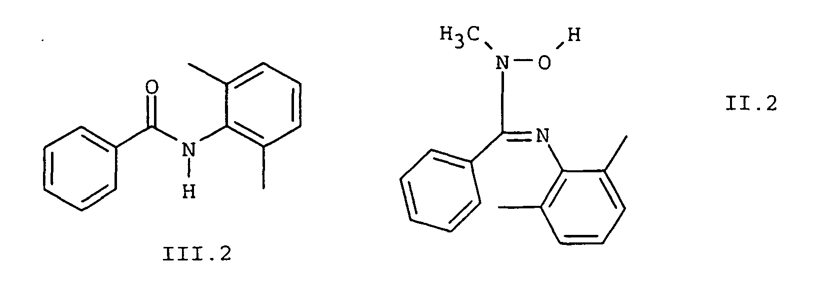

Ausbeute: 1.63 g (63 %), Summenformel: C₁₆H₁₈N₂O, Farbe: weiß
1H-NMR (CDCl₃):2,16 (6H, s, 2 x CH₃), 3.47 (3H, s, N-CH₃), 6.82 - 6.92 (3H, m, Phenyl), 7,08 - 7,27 (5H, m, Phenyl)
13C-NMR (CDCl₃): 18,6 (CH₃), 43,6 (N-CH₃), 126,6, 127,7, 128,0, 128,2, 128,5 (C-Phenyl), 130,1, 135,4, 135,5 (quartäre C, Phenyl), 149,0 (C=N)
IR (KBr, cm⁻¹) : 1627 (vs), 1590 (m), 1578 (m), 1505 (m), 1472 (m), 1445 (m), 1426 (m), 1341 (m), 1258 (m), 1237 (s), 1179 (s), 1158 (m), 1106 (m), 1092 (m), 1079 (w), 1048 (m), 1025 (m), 957 (vs), 783 (vs), 774 (vs), 762 (vs), 754 (vs), 726 (s),
700 (vs)
MS (EI): M⁺ = 254,2 m/z

### 1.3. Darstellung des protonierten Liganden II.3

### Beispiel 1.1 wurde wiederholt, aber unter Verwendung des Amids III.2

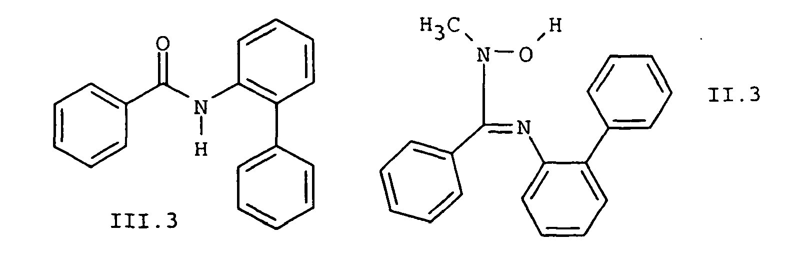

Ausbeute: 1.39 g (48%), Summenformel: C₂₀H₁₈N₂O, Farbe: weißbeige
1H-NMR (CDCl₃) : 3,38 (3H, s, N-CH₃), 6,48 - 6,51 (1H, m, Phenyl), 6,89 - 7,02 (4H, m, Phenyl), 7,11 - 7,14 (1H, m, Phenyl), 7,25 - 7,42 (8H, m, Phenyl)
13C-NMR (CDCl₃): 43.5 (N-CH₃), 122,5, 124,0, 127,4, 127,5, 127,9, 128,7, 128,9, 129,0, 130,1, 130,7 (C-Phenyl, C-Biphenyl), 134,7, 135,5 (quartäre C, Phenyl), 138,4 (C=N-C, quartäres C, Biphenyl), 146,8 (C=N)
IR (KBr, cm⁻¹): 3257 (w), 2946 (w), 1607 (s), 1580 (m), 1509 (s), 1488 (s), 1447 (m), 1436 (s), 1422 (s), 1393 (m), 1387 (m), 1243 (s), 1196 (s), 1073 (m), 963 (s), 783 (m), 770 (vs), 756 (vs), 743 (vs), 698 (vs)
MS (EI): M⁺ = 302,2 m/z

### Beispiel 1.4. Synthese des protonierten Liganden II.4

### Beispiel 1.1. wurde wiederholt, aber unter Verwendung des Amids III.4

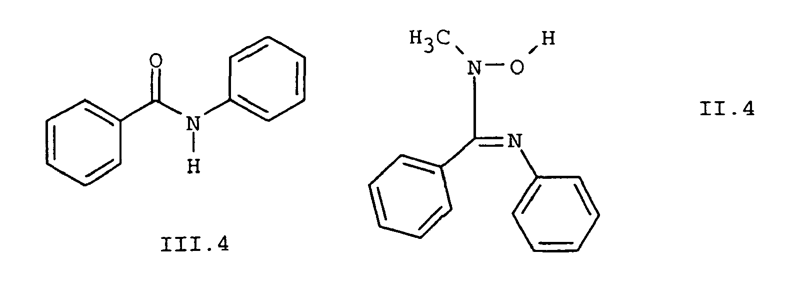

Ausbeute: 1,03 g (42 %), Summenformel: C₁₄H₁₄N₂O, Farbe: weißbeige
1H-NMR (CDCl₃): 3,47 (3H, s, N-CH₃), 6,56 (2H, d, Phenyl), 6,87 (1H, pseudo-t, Phenyl), 7,01 (2H, pseudo-t, Phenyl), 7.25 (2H, pseudo-d, Phenyl), 7,24 - 7,43 (3H, m, Phenyl)
13C-NMR (CDCl₃): 43,4 (N-CH₃), 121,0, 123,3, 127,8, 128,6, 129,0, 129,1, 130,4 (C-Phenyl), 138,1 (C=N-C, quartäres C, Phenyl), 146,7 (C=N, quartäres C)
IR (KBr, cm⁻¹) : 3049 (w), 2943 (w), 1615 (vs), 1603 (s), 1574 (m), 1509 (s), 1482 (m), 1447 (m), 1428 (m), 1196 (s), 1160 (m), 1071 (w), 971 (s), 758 (s), 726 (s),
697 (vs)
MS (EI) : M⁺ = 226,1 m/z

### Beispiel 1.5.

### Beispiel 1.1. wurde wiederholt, aber unter Verwendung von N-Isopropylhydroxylamin-hydrochlorid IV.5

Ausbeute: 0,63 g (36 %), Summenformel: C₂₂H₃₀N₂O, Farbe: hellgelb
Schmp.: 94 - 96 °C 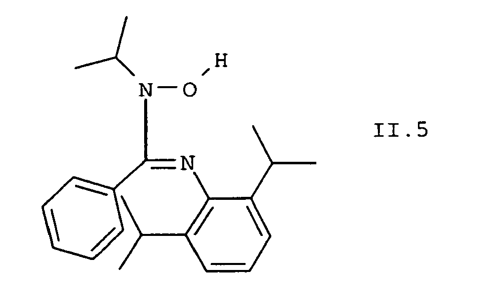 1H-NMR (CDCl₃): 0,98 (6H, d, Ph-CH-(CH₃)₂, J = 6,2 Hz), 1,11 (6H, d, Ph-CH-(CH₃)₂, J = 6,2 Hz), 1,37 (6H, d, N-CH-(CH₃)₂, J = 6,6 Hz), 3.16 (2H, sept, 2 x Ph-CH-(CH₃)₂), 4,03 (1H, sept, N-CH-(CH₃)₂, J = 6,6 Hz), 6,95 (2H, pseudo-d, Phenyl), 7,02 - 7,12 (3H, m, Phenyl), 7,20 - 7,27 (3H, m, Phenyl)
13C-NMR (CDCl₃): 20,0, 21,9, 25,4, 28,2 (CH(CH₃)₂, CH(CH₃)₂), 54,8 (N-CH₃), 123,0, 127,5, 127,7, 128,3, 128,5, 129,9 (C-Phenyl), 132,5 (quartäres C, Phenyl), 145,9 (C=N-C, quartäres C, Phenyl), 148,1 (C=N)
IR (KBr, cm⁻¹): 3433 (w), 3064 (w), 3006 (w), 2968 (s), 2948 (m), 2931 (m), 2867 (m), 1683 (w), 1598 (vs), 1503 (s), 1461 (s), 1436 (m), 1385 (m), 1378 (m), 1360 (s), 1343 (w), 1335 (w), 1320 (w), 1256 (w), 1173 (vs), 1123 (w), 1104 (w), 1067 (vs), 1040 (w), 978 (m), 930 (w), 924 (w), 822 (w), 808 (s), 781 (m), 760 (s), 702 (s)
MS (EI): M⁺ = 338,3 m/z

### Beispiel 1.6. Darstellung des protonierten Liganden II.6

### Beispiel 1.1. wurde wiederholt, aber unter Verwendung von N-paratolylhydroxylamin

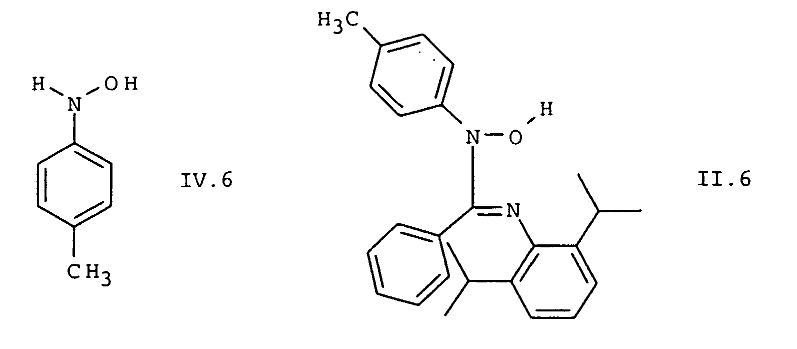

Zur Herstellung von IV.6 wurde wie folgt vorgegangen:

In einem 50 ml Rundkolben wurden 0,7 g p-NO₂-Toluol (5,1 mmol) vorgelegt und in 6 ml Methanol partiell gelöst. Nach Zugabe von in 2 ml Wasser gelöstem NH₄Cl (0,27 g, 5.0 mmol) wurde die entstehende Suspension unter Rückfluss erhitzt, wie in *Liebigs Ann. Chem.* **1985**, *4*, 673 beschrieben. Zink in Pulverform wurde in Portionen von je 400 mg (2 x), 600 mg (2 x) in der angegebenen Reihenfolge zugegeben. Nach der 4. Zugabe (in Summe 2 g, 31 mmol) und 1 h Rückfluss wurde dünnschichtchromatographisch kein Edukt mehr nachgewiesen.

Der Inhalt des Reaktionskolbens wurde in ein mit Wasser gefülltes Becherglas geschüttet. Überschüssiges Zink wurde abfiltriert, das Filtrat in einen Scheidetrichter überführt und mit je 25 ml Methylenchlorid 3 x extrahiert. Die vereinigten organischen Phasen wurden über Na₂SO₄ getrocknet. Nach Abzug des Lösungsmittels am Rotationsverdampfer wurde der entstehende gelbe Festkörper am Hochvakuum getrocknet.
Ausbeute: 0,53 g (4,3 mmol)
Anschließend wurde analog zur Darstellung von II.1 weitergearbeitet.
Ausbeute: 0.30 g (18 %), Summenformel: C₂₆H₃₀N₂O, Farbe: braun
1H-NMR (CDCl₃): 0,90 (6H, d, CH(CH₃)₂, J = 7,0 Hz), 1,11 (6H, d, CH(CH₃)₂, J = 7,0 Hz), 2,19 (3H, s, N-Ph-CH₃), 3,17 (2H, sept, 2 x CH(CH₃)₂, J = 7,0 Hz), 6,82 - 6,91 (4H, m, Phenyl), 6,96 - 7,23 (8H, m, Phenyl)
13C-NMR (CDCl₃): 14,0, 20,9, 22,0, 22,5, 25,2, 28,4, 31,5 (5 x CH₃, 2 x CH), 123,4, 125,4, 127,4, 127,8, 127,9, 129,0, 129,6, 129,7 (C-Phenyl), 132,1, 137,4 (quartäre C, Phenyl), 141,0 (N-C, quartäres C, Phenyl), 145,4 (C=N-C, quartäres C, Phenyl), 150,5 (C=N)
IR (KBr, cm⁻¹) : 2964 (s), 2927 (m), 2867 (m), 1600 (vs), 1571 (s), 1507 (s), 1461 (s), 1322 (m), 1302 (w), 1285 (w), 1260 (m), 1239 (m), 1187 (w), 1106 (m), 1077 (w), 1044 (m), 818 (s), 787 (s), 776 (s), 758 (s), 697 (s)
MS (FAB) : [M + H]⁺ = 387,3 m/z

### Beispiel 1.7. Darstellung des protonierten Liganden II.7

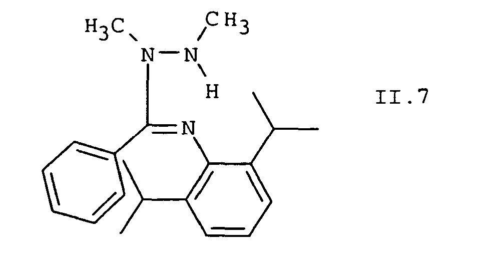

Bei der Darstellung von II.7 diente N,N'-Dimethylhydrazin als Reagenz und als Base. Auf die Zugabe von Triethylamin wurde verzichtet. Die Arbeitsvorschrift wurde wie folgt modifiziert:

In ein ausgeheiztes, mit Argon gespültes Schlenkrohr wurde N,N'-Dimethylhydrazin (0,58 ml, 0,46 g, 7,7 mmol) vorgelegt und in absolutem Ethanol (50 ml) gelöst.

Über einen Tropftrichter wurde in Methylenchlorid gelöstes Imidchlorid III.1 (10 ml, 1,08 g, 3,6 mmol, c = 0.115 g/ml) bei - 45°C innerhalb von 60 min langsam zugegeben. Nach Anwärmen auf Raumtemperatur wurde die Reaktionslösung 1 h lang gerührt (Farbwechsel: farblos → gelb). Das bei der Reaktion entstehende Hydraziniumsalz fiel aus, eine trübe Suspension entstand.
Anschließende Reaktionskontrolle mittels Dünnschichtchromatographie (Diethylether/Hexan = 1/1) zeigte kompletten Umsatz.

Die Reaktionslösung wurde auf Wasser (ca. 100 ml) gegossen, das Produkt mit je 50 ml Diethylether 3 x extrahiert. Die vereinigten organischen Phasen wurden mit Na₂SO₄ getrocknet, das Trockenmittel abfiltriert. Nach Abzug des Lösungsmittels am Rotationsverdampfer wurde das entstehende zähflüssige Öl am Hochvakuum getrocknet.
Ausbeute: 1,10 g (94 %), Summenformel: C₂₁H₂₉N₂O, Farbe: braun
1H-NMR (CDCl₃): 0,94 (6H, d, CH(CH₃)₂, J = 7,0 Hz), 1,06 (6H, d, CH(CH₃)₂, J = 6,6 Hz), 2,64 (3H, s, CH₃-NH), 2,90 (3H, s, N-CH₃), 2,94 (2H, sept, 2 x CH(CH₃)₂), 6,78 - 6,86 (3H, m, Phenyl), 7,01 - 7,14 (5H, m, Phenyl)
13C NMR (CDCl₃): 21,8, 24.1 (CH(CH₃)₂), 28,1 (CH(CH₃)₂), 36,4 (NH-CH₃), 39,2 (N-CH₃), 122,1, 122,2, 127,8, 128,1, 128,8, 133,1, 138,2 (C-Phenyl), 144,7 (C=N-C, quartäres C, Phenyl), 157,3 (C=N)
IR (KBr, cm⁻¹): 3244 (w), 3062 (w), 3022 (w), 2973 (m), 2960 (m), 1609 (vs), 1596 (s), 1586 (vs), 1576 (s), 1492 (w), 1439 (m), 1382 (m), 1364 (s), 1329 (m), 1262 (m), 1183 (w), 1111 (m), 1069 (s), 1046 (m), 1025 (s), 924 (m), 845 (s), 824 (m), 808 (w), 799 (m), 772 (vs), 760 (vs), 714 (vs), 700 (vs)
MS (EI): M⁺ = 323,3 m/z

**Tabelle 1: Übersicht über protonierte Liganden der allgemeinen Formel II**

| prot. Ligand | R¹ | R² | R³ | Nu |
|---|---|---|---|---|
| II.1 | 2,6-(*i*-C₃H₇)₂C₆H₃ | C₆H₅ | CH₃ | O |
| II.2 | 2, 6- (CH₃)₂C₆H₃ | C₆H₅ | CH₃ | O |
| II.3 | 2-(C₆H₅)-C₆H₄ | C₆H₅ | CH₃ | O |
| II.4 | C₆H₅ | C₆H₅ | CH₃ | O |
| II.5 | 2,6-(*i*-C₃H₇)₂C₆H₃ | *p*-CH₃-C₆H₄ | *i*-C₃H₇ | O |
| II.6 | 2,6-(*i*-C₃H₇)₂C₆H₃ | *p*-CH₃-C₆H₄ | CH₃ | O |
| II.7 | 2,6-(*i*-C₃H₇)₂C₆H₃ | C₆H₅ | CH₃ | N-CH₃ |

| | | | | |
|---|---|---|---|---|
| i-C₃H₇: iso-Propyl; p-CH₃-C₆H₄: para-Tolyl | | | | |

### 2. Komplexsynthesen

### 2.1. Synthesen von Komplexverbindungen der allgemeinen Formel I a

In ein ausgeheiztes und mit Argon gespültes Schlenkrohr wurde II.1 (0,28 g, 0,90 mmol) vorgelegt, in 20 ml THF (absolut) gelöst, bei -80°C im Kältebad (EtOH, N₂) mittels n-Buthyllithium (0,45 ml, 0,90 mmol, 2,0 M in Pentan) deprotoniert (Farbwechsel: orange → dunkelrot) und 1 h lang bei der angegebenen Temperatur gerührt.

Nach Zugabe des Übergangsmetallhalogenids (ZrCl₄, 0,21 g, 0,90 mmol) bei - 80°C wurde das Kältebad entfernt, die Lösung wurde anschließend über Nacht gerührt.

Das THF wurde im Hochvakuum abgezogen, der orangebraune Rückstand wurde in 50 ml Methylenchlorid (absolut) suspendiert. Das bei der Reaktion entstehende LiCl wurde aus der Suspension abfiltriert. Die Lösung wurde anschließend im Hochvakuum bis zur Trockne eingeengt, der Rückstand 1 x mit 10 ml Hexan (absolut) digeriert und gewaschen. Das Lösungsmittel wurde abgehebert, die pulverige, orangefarbene Komplexverbindung I.a.1 im Hochvakuum getrocknet. 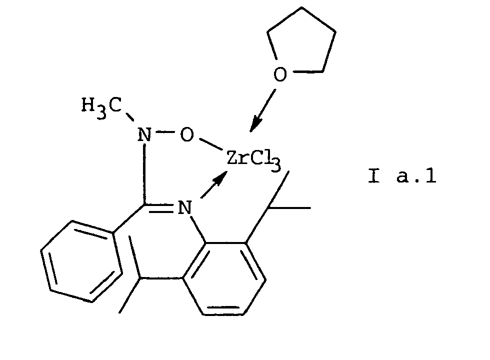 Ausbeute: 0,41 g (90 %), Summenformel: C₂₀H₂₅Cl₃N₂OZr, Farbe: orange
1H-NMR (CD₂Cl₂) : 1,04 (6H, d, CH(CH₃)₂), 1,32 (6H, d, CH(CH₃)₂), 1,81 (CH₂, breit, koordinierendes THF), 3,33 (5H, m, N-CH₃, 2 x CH(CH₃)₂, Signale überlagert), 3,83 (CH₂-O, breit, koordinierendes THF), 6,94 - 7,02 (3H, m, Phenyl), 7,10 - 7,35 (5H, m, Phenyl) 13C-NMR (CD₂Cl₂): 24,2, 25,9 (CH(CH₃)₂), 28,1 (CH(CH₃)₂), 41,6 (N-CH₃), 123,6, 124,2, 126,1, 128,5, 128,7, 129,1, 129,3, 129,4, 130,6, 143,9, 144.2 (C-Phenyl), 161,7 (C=N).

Analog wurde durch Umsetzung von deprotoniertem II.2 mit ZrCl₄ die Komplexverbindung I a.2 erhalten. 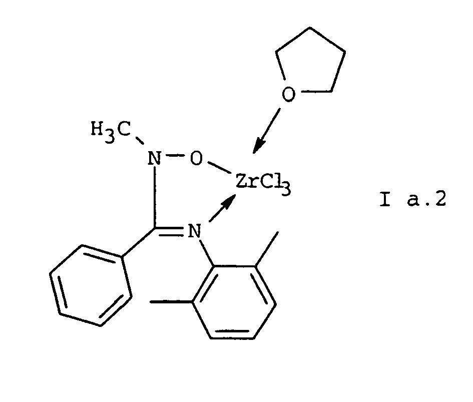 Ausbeute: 0,82 g (86 %), Summenformel: C₁₆H₁₇Cl₃N₂OZr, Farbe: orange
1H-NMR (CD₂Cl₂): 1,91 (CH₂, breit, koordinierendes THF), 2,28, 2,31, 2,34, 2,39 (6H, 4 x s, Ph-CH₃, Isomere), 3,27, 3,33 (3H, 2 x s, N-CH₃, Isomere), 3,85 (CH₂-O, breit, koordinierendes THF), 4,53 (CH₂-O, breit, koordinierendes THF), 6,83 - 7,37 (8H, m, Phenyl)
13C-NMR (CD₂Cl₂): 18,7, 19,5, 19,7, 20,7, 20,9 (Ph-CH₃, Isomere), 25,8 (CH₂, THF), 39,5, 41,3, 41,9, 42,2 (N-CH₃, Isomere), 69,3 (CH₂-O, THF), 125,5, 126,0, 127,2, 127,9, 128,0, 128,1, 128,4, 128,7, 128,9, 129,2, 130,1, 130,3, 130,4, 130,5, 130,9, 131,4, 133,1, 133,4, 133,8, 134,4, 134,7, 146,3 (Phenyl, Isomere), 161,3 (C=N).

Analog wurde durch Umsetzung von deprotoniertem II.3 mit ZrCl₄ die Komplexverbindung I a.3 erhalten. 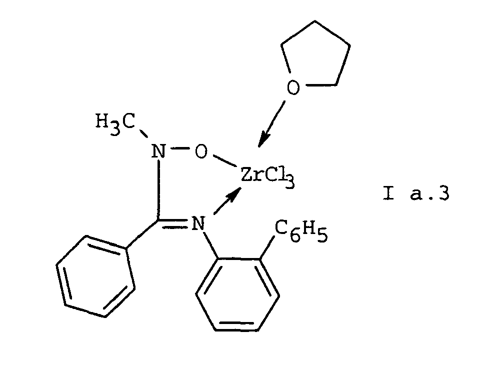 Ausbeute: 0,71 g (88 %), Summenformel: C₂₀H₁₇Cl₃N₂OZr, Farbe: braun
1H-NMR (CD₂Cl₂): 1,88 (4H, 2 x CH₂, breit, koordinierendes THF), 2,00 (CH₂, koordinierendes THF, Schulter), 2,33, 2,84, 2,97, 3,15 (3H, s, N-CH₃, mehrere Singuletts, die in Summe 3 H ergeben, Isomere, Signal-2,84 höchste Intensität), 3,82 (4H, 2 x CH₂-O, breit, koordinierendes THF), 4,56 (CH₂-O, breit, koordinierendes THF), 6,90 - 7,43 (14H, m, Phenyl)
13C-NMR (CD₂Cl₂): 25,9 (CH₂, THF), 41,1 (N-CH₃), 69,2 (CH₂-O, THF), 126,3, 127,2, 127,8, 127,9, 128,1, 128,5, 128,6, 128,7, 129,3, 129,4, 129,7, 130,2, 130,3 (C-Phenyl), 131,2, 139,9 (quartäre C, Phenyl), 144,5 (C=N-C, quartäres C, Phenyl),160,9 (C=N).

Analog wurde durch Umsetzung von deprotoniertem II.4 mit ZrCl₄ die Komplexverbindung I a.4 erhalten. 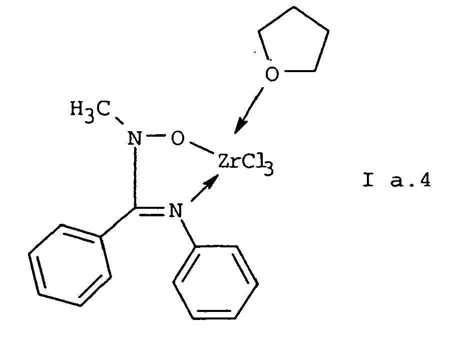 Ausbeute: 0,58 g (92 %), Summenformel: C₁₄H₁₃Cl₃N₂OZr, Farbe: gelb
1H-NMR (CD₂Cl₂): 1,86 (4H, 2 x CH₂, koordinierendes THF), 2,78, 3,32 (3H, 2 x s, N-CH₃, Isomere, 2,78-Signal mit höchster Intensität), 3,84 (4H, breit, 2 x CH₂-O, koordinierendes THF), 4,54 (CH₂-O, koordinierendes THF), 6,92 - 7,35 (10H. m, Phenyl)
13C-NMR (CD₂Cl₂) : 25,8 (CH₂, THF), 40,0 (N-CH₃), 125,2, 126,5, 128,3. 128,4, 128,6, 128,8, 129,0, 129,1, 129,2, 130,8 (C-Phenyl), 146,3 (C=N-C, quartäres C, Phenyl), 159,3 (C=N).

Analog wurde durch Umsetzung von deprotoniertem II.5 mit ZrCl₄ die Komplexverbindung I a.5 erhalten. 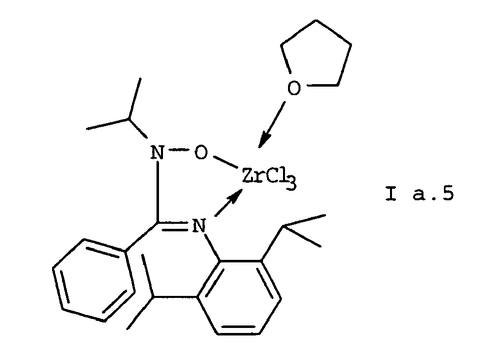 Ausbeute: 0,28 g (64%), Summenformel: C₂₂H₂₉Cl₃N₂OZr, Farbe: weiß
1H-NMR (CD₂Cl₂): 1,00 - 1,45 (15H, m, 2 x Ph-CH(CH₃)₂, N-CH(CH₃), 1,61 (3H, d, N-CH(CH₃), J = 6,6 Hz), 1,83 (CH₂, breit, koordinierendes THF), 2,10 (CH₂, breit, koordinierendes THF), 3,28 - 4,02 (3H, m, 3 x CH(CH₃)₂, überlagerte Septetts), 3,76 (CH₂-O, breit, koordinierendes THF), 4,70 (CH₂-O, breit, koordinierendes THF), 6,92 - 7,15 (2H, m, Phenyl), 7,18 - 7,46 (6H, m, Phenyl)
13C-NMR (CD₂Cl₂): 20,0, 20,1, 22,0, 23,8, 24,3, 25,9, 26,1, 26.3, 28,2, 29,0, 29,2 (CH(CH₃)₂, CH(CH₃)₂, Isomere), 55,1 (N-CH), 123,5, 123,6, 123,8, 124,1, 126,1, 126,3, 127,9, 128,5, 128,6, 128,8, 129,0, 129,2, 129,6, 129,7, 130,5, 131,9, 143,8, 144,5, 146,9, 147,4, 155,0 (Phenyl, Isomere), 162,0 (C=N).

Analog wurde durch Umsetzung von deprotoniertem II.6 mit ZrCl₄ die Komplexverbindung I a.6 erhalten. 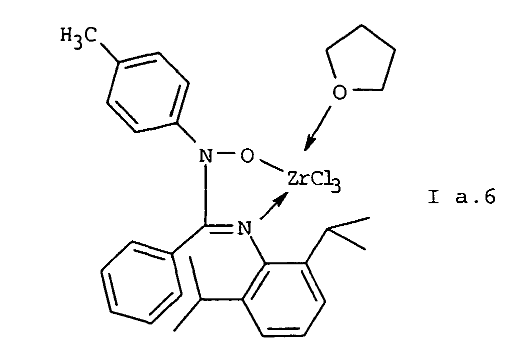 Ausbeute: 0,29 g (90 %), Summenformel: C₂₆H₂₉Cl₃N₂OZr, Farbe: beige
1H-NMR (CD₂Cl₂): 1,05 - 1,35 (12H, m, 2 x CH(CH₃)₂), 1,82 (CH₂, breit, koordinierendes THF), 1,97 (CH₂, koordinierendes THF, Schulter), 2,27 (3H, s, N-Ph-CH₃), 3,20, 3,40 (2H, 2 x sept, CH(CH₃)₂), 3,77 (CH₂-O, breit, nicht koordinierendes THF), 4,48 (CH₂-O, koordinierendes THF), 6.77 - 7,67 (12H, m, Phenyl).

Analog wurde durch Umsetzung von deprotoniertem II.7 mit ZrCl₄ die Komplexverbindung I a.7 erhalten. 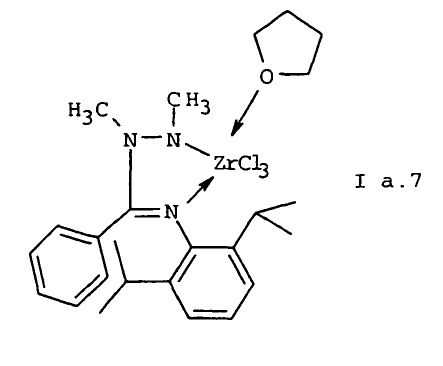 Ausbeute: 0,71 g (85 %), Summenformel: C₂₁H₂₈Cl₃N₃Zr, Farbe: gelb
1H-NMR (CD₂Cl₂): 0,93 - 1,24 (12H, 4 x d, 2 x CH(CH₃)₂), 1,82 (CH₂, breit, koordinierendes THF), 2,94, 3,07, 3,18, 3,29 (5H, 4 x s, sept, N-CH₃, 2 xCH(CH₃)₂, Isomere, 3,18-Signal mit höchster Intensität), 3,39, 3,48, 3,57, 3,89 (3H, 3 x s, N-CH₃, Isomere), 3,84 (CH₂-O, koordinierendes THF), 4,56 (CH₂-O, koordinierendes THF), 6,90 - 7,60 (8H, m, Phenyl)
13C-NMR (CD₂Cl₂) : 21,8, 22,6, 24,2, 25,3, 25,9, 27,0, 28,2, 29,2 (CH(CH₃)₂, CH(CH₃)₂. Isomere), 34,9, 38,8, 40,4 (N-CH₃, Isomere), 123,0, 124,0, 124,3, 128,3, 128,6, 128,9, 129,5, 129,7, 129,8, 133.0 (C-Phenyl, 2 Isomere), 143,8, 144,0 (C=N-C, quartäres C, Phenyl, 2 Isomere), 146.1 (C=N).

Analog wurde durch Umsetzung von deprotoniertem II.2 mit TiCl₄ die Komplexverbindung I a.8 erhalten. 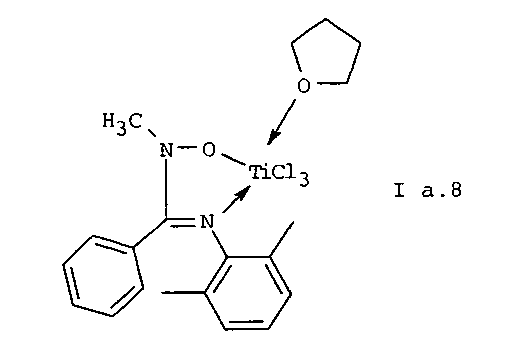 Ausbeute: 0,67 g (95 %), Summenformel: C₁₆H₁₇Cl₃N₂OTi, Farbe: orange
1H-NMR (CD₂Cl₂): 2,13 (3H, s, Ph-CH₃), 2,34 (3H, s, Ph-CH₃), 3,40, 3,49, 3,63 (3H, s, N-CH₃, 3 Singuletts abnehmender Intensität, in Summe 3H, Isomere, 3,40 ppm höchste Intensität), 6,85 (3H, pseudo-d, Phenyl), 7,12 - 7,41 (5H, m, Phenyl)
13C-NMR (CD₂Cl₂): 19,6, 20,4 (Ph-CH₃), 30,0, 39,2, 41,5 (N-CH₃, Isomere), 125,8, 126,0, 128,1, 128,5, 128,7, 129,0, 129,3, 131,0 (C-Phenyl), 131,7, 133,2, 133,5 (quartäre C, Phenyl, Isomere), 145,4, 149,9 (C=N-C, quartäres C, Phenyl, Isomere), 160,3 (C=N)

Analog wurde durch Umsetzung von deprotoniertem II.2 mit VCl₄ die Komplexverbindung I a.9 erhalten. 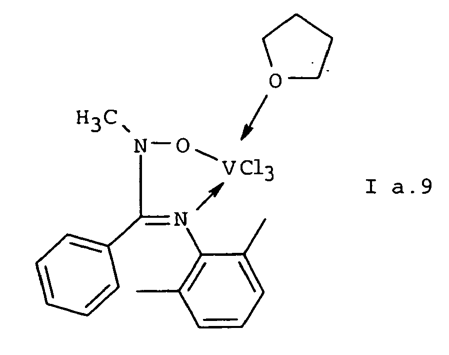 Ausbeute: 0,58 g (91 %), Summenformel: C₁₆H₁₇Cl₃N₂OV, Farbe: dunkelgrün
1H-NMR: Der Komplex ist paramagnetisch, es können keine Signale zugeordnet werden.

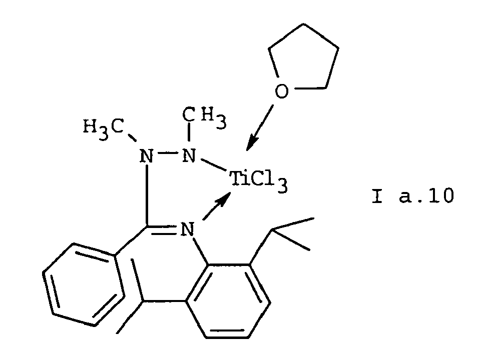

Analog wurde durch Umsetzung von deprotoniertem II.7 mit TiCl₄ die Komplexverbindung I a.10 erhalten.
Ausbeute: 0,56 g (95 %), Summenformel: C₂₁H₂₈Cl₃N₃Ti, Farbe: blaugrün
1H-NMR (CD₂Cl₂) : 1,05 (6H, d, CH(CH₃)₂, J = 6,9 Hz), 1.34 (6H, d, CH(CH₃)₂, J = 6,6 Hz), 2,93 (2H, sept, 2 x CH(CH₃)₂), 3,38 (3H, s, N-CH₃), 4,38 (3H, s, Ti-N-CH₃), 6,99 (2H, pseudo-d, Phenyl), 7,07 - 7,15 (3H, m, Phenyl), 7,27 - 7,36 (3H, m, Phenyl)
13C-NMR (CD₂Cl₂): 23,9, 25,3 (CH(CH₃)₂), 28,6 (CH(CH₃)₂), 38,0 (N-CH₃), 45,2 (Ti-N-CH₃), 123,8, 128,0, 128,7, 128,9, 129,0, 131,4, 141,2 (C-Phenyl), 150,9, (C=N-C, quartäres C, Phenyl), 160,0 (C=N).

**Tabelle 2: Übersicht über erfindungsgemäße Komplexverbindungen der allgemeinen Formel I a**

| Verbindung | R¹ | R² | R³ | Nu | M |
|---|---|---|---|---|---|
| I a.1 | 2,6-(*i*-C₃H₇)₂C₆H₃ | C₆H₅ | CH₃ | O | Zr |
| I a.2 | 2,6-(CH₃)₂C₆H₃ | C₆H₅ | CH₃ | O | Zr |
| I a.3 | 2-(C₆H₅)-C₆H₄ | C₆H₅ | CH₃ | O | Zr |
| I a.4 | C₆H₅ | C₆H₅ | CH₃ | O | Zr |
| I a. 5 | 2,6-(*i*-C₃H₇) ₂C₆H₃ | *p*-CH₃-C₆H₄ | *i*-C₃H₇ | O | Zr |
| I a.6 | 2,6-(*i*-C₃H₇)₂C₆H₃ | *p*-CH₃-C₆H₄ | CH₃ | O | Zr |
| I a.7 | 2,6-(*i*-C₃H₇)₂C₆H₃ | C₆H₅ | CH₃ | N-CH₃ | Zr |
| I a.8 | 2,6-(CH₃)₂C₆H₃ | C₆H₅ | CH₃ | O | Ti |
| I a.9 | 2,6-(CH₃)₂C₆H₃ | C₆H₅ | CH₃ | O | V |
| I a.10 | 2,6-(i-C₃H₇)₂C₆H₃ | C₆H₅ | CH₃ | N-CH₃ | Ti |

| | | | | | |
|---|---|---|---|---|---|
| i-C₃H₇: iso-Propyl; p-CH₃-C₆H₄: para-Tolyl | | | | | |

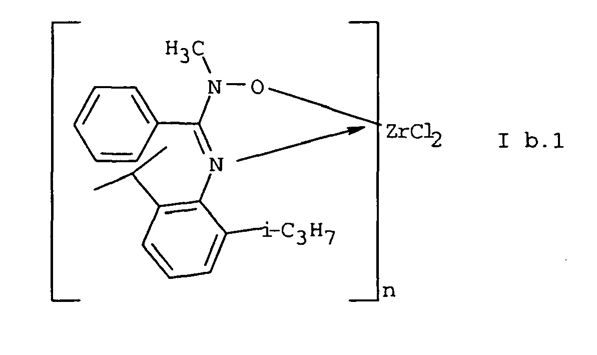

### 2.2. Synthese von Komplexverbindungen der allgemeinen Formel I b

### Allgemeine Arbeitsvorschrift am Beispiel von I b.1

In ein ausgeheiztes und mit Argon gespültes Schlenkrohr wurde II.1 (0,65 g, 2,08 mmol) vorgelegt, in 20 ml THF (absolut) gelöst unter Bildung einer rosafarbenen Lösung und bei - 110°C im Kältebad (EtOH, N₂) mittels n-BuLi (1.2 ml, 2.4 mmol, 2.0 M in Pentan) deprotoniert (Farbwechsel: rosarot → gelb).

Nach Zugabe des Übergangsmetallhalogenids (ZrCl₄, 0.21 g, 0.90 mmol, < 1/2 meq) bei - 110 °C wurde 1 h lang bei dieser Temperatur gerührt. Das Kältebad wurde entfernt. Nach Anwärmen auf Raumtemperatur wurde über Nacht gerührt - eine klare, gelbe Lösung entstand.

Das THF wurde im Hochvakuum abgezogen, der Rückstand in 50 ml Methylenchlorid (absolut) suspendiert. Das bei der Reaktion entstehende feinkörnige LiCl wird aus der Suspension durch Filtration (G4-Fritte und Zelite^{®}) entfernt. Das Filtrat wurde anschließend im Hochvakuum bis zur Trockne eingeengt, der Rückstand 1 x mit 10 ml Hexan (absolut) digeriert und gewaschen. Das Lösungsmittel wurde abgehebert, die pulverige, gelbe Komplexverbindung I.b.1 im Hochvakuum getrocknet.
Ausbeute: 0,54 g (77 %), Summenformel: C₄₀H₅₀Cl₂N₄O₂Zr, Farbe: weißbeige
1H-NMR (CD₂Cl₂): 0,23, 0,43, 0,92, 1,04 (24H, 4 x d, 4 x CH(CH₃)₂), 4 x J = 6, 6 Hz), 2,89 (2H, sept, 2 x CH(CH₃)₂), 3,18 (2H, sept, 2 x CH(CH₃)₂), 3,40, 3,54, 3,60, 3,97 (6H, 4 x s, N-CH₃, Isomere, 3,60-Signal mit höchster Intensität), 6,80 - 7,29 (16H, m, Phenyl)
13C-NMR (CD₂Cl₂): 24,5, 25,1, 25,9, 26,2, 27,9, 28,1 (CH(CH₃)₂, CH(CH₃)₂), 43,6 (N-CH₃), 123,5, 124,2, 124,8, 125,8, 127,7, 127,9, 128,3, 128,7, 129,0, 129,4, 130,0, 130,3 (C-Phenyl), 143,3, 143,5, 145,5 (C=N-C, quartäres C, Phenyl), 159.8 (C=N).

### 3. Polymerisationsexperimente

### 3.1. Polymerisation im Autoklaven

In einen inertisierten 1-1-Stahlautoklaven wurde die angegebene Menge des zu untersuchenden Komplexes, 2 ml 30 Gew.-%ige MAO-Lösung in Toluol (kommerziell erhältlich von Fa. Witco) und 400 ml Toluol gegeben. Bei 70°C wurde Ethylen bis zu einem Druck von 40 bar aufgepresst. Dieser Druck wird durch Nachdosieren von Ethylen über die Versuchsdauer von 90 min konstant gehalten. Die Reaktion wurde durch Entspannen abgebrochen und das Polymer durch Filtration, anschließendes Waschen mit Methanol und Trocken im Vakuum isoliert.

**Tabelle 3: Polymerisationsergebnisse**

| | *Ethylenpolymerisation (40 bar)* | | | | |
|---|---|---|---|---|---|
| Komplexverbindung | Aktivität | Ausbeute | η | Zeit | Einwaage Komplexverbindung |
| | [gmmol-¹h⁻¹bar⁻¹] | [g] | [dl/g] | [min] | [mg] |
| I a.1 | 50,2 | 9,5 | 9,51 | 30 | 4,8 |
| I a.2 | 45,1 | 12,0 | 14,01 | 30 | 6 |
| I a.3 | 68,4 | 4,8 | 11,41 | 35 | 1,5 |
| I a.4 | 78,7 | 6,7 | 24,95 | 60 | 0,9 |
| I a.5 | 88,4 | 11,9 | 4,43 | 90 | 1,2 |
| I a.6 | 51,3 | 8,8 | 8,76 | 75 | 2 |
| I a.7 | 76,8 | 6,2 | 15,6 | 45 | 1,4 |
| I a.8 | 18,8 | 7,4 | 54,33 | 60 | 4 |
| I a.9 | 5,3 | 6,2 | 19,18 | 90 | 8 |
| I a.10 | 28 | 1,0 | Nicht bestimmt | 15 | 1,7 |
| I b.1 | 30,6 | 9,4 | 41,38 | 90 | 4 |

### 3.2 Ethylen-Hexen-Copolymerisation

Es wurde wie unter 3.1 verfahren, aber zu Beginn wurden mit den anderen Reagenzien 12,5 bzw. 25 ml 1-Hexen in den Autoklaven gegeben.

**Tabelle 4: Copolymerisationsergebnisse**

| | | *Copolymerisation (EthenlHexen, 40 bar)* | | | | |
|---|---|---|---|---|---|---|
| Komplexverbindung | Zugabe 1-Hexen | Aktivität | Ausbeute | η | Zeit | Einwaage Komplexverbindung |
| | [ml] | [gmmol⁻¹h⁻¹ bar⁻¹] | [g] | [dl/g] | [min] | [mg] |
| I a.4 | 12,5 | 131,1 | 12,4 | 11,40 | 60 | 1,0 |
| I a.4 | 25 | 39,2 | 5,1 | 4,63 | 75 | 1,1 |
| I a.8 | 12,5 | 13,2 | 7,0 | 9,94 | 85 | 3,8 |
| I a.8 | 25 | 8,7 | 1,7 | 7,53 | 30 | 4,0 |

## Patentansprüche

1. Komplexverbindungen der allgemeinen Formel I a oder I b, 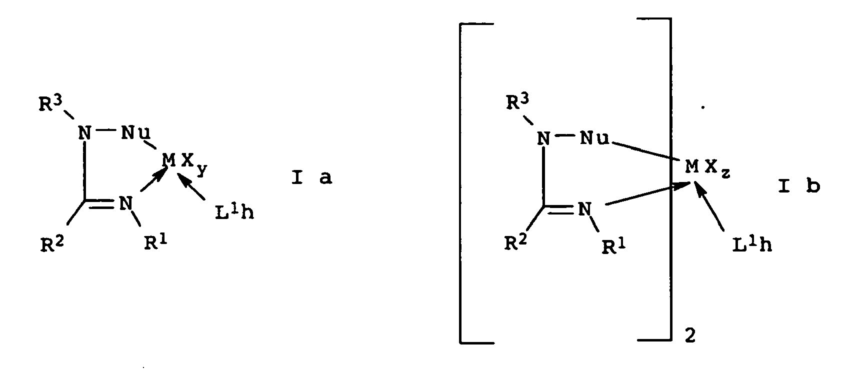 bei denen die Variablen wie folgt definiert sind:
Nu ausgewählt aus O, S, N-R⁴, P-R⁴,
M ausgewählt aus Ti, Zr, Hf, V, Nb, Ta;
h ist eine ganze Zahl von 0 bis 4;
y entspricht der Oxidationsstufe von M abzüglich 1;
z entspricht der Oxidationsstufe von M abzüglich 2;
X gleich oder verschieden und ausgewählt aus Halogen, C₁-C₆-Alkoxy, Acetylacetonat, N(R⁵R⁶), C₁-C₈-Alkyl, C₃-C₁₂-Cycloalkyl, C₇-C₁₃-Aralkyl oder C₆-C₁₄-Aryl,
R¹, R⁴ gleich oder verschieden und ausgewählt aus
Wasserstoff,
C₁-C₁₈-Alkyl,
C₂-C₁₈-Alkenyl, mit ein bis 4 isolierten oder konjugierten Doppelbindungen;
C₃-C₁₂-Cycloalkyl,
C₇-C₁₃-Aralkyl,
C₆-C₁₄-Aryl, unsubstituiert oder einfach oder mehrfach gleich oder verschieden substituiert mit
C₁-C₁₈-Alkyl,
C₂-C₁₈-Alkenyl,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
SiR⁵R⁶R⁷ oder O-SiR⁵R⁶R⁷;
fünf- bis sechsgliedrigen stickstoffhaltigen Heteroarylresten, unsubstituiert oder einfach oder mehrfach gleich oder verschieden substituiert mit
C₁-C₁₈-Alkyl,
C₂-C₁₈-Alkenyl,
C₃-C₁₂-Cycloalkyl,
C₇-C₁₃-Aralkyl,
C₆-C₁₄-Aryl,
Halogen,
C₁-C₆-Alkoxy,
C₆-C₁₄-Aryloxy,
Si R⁵R⁶R⁷ oder O-SiR⁵R⁶R⁷;
R² C₆-C₁₄-Aryl, unsubstituiert oder einfach oder mehrfach gleich oder verschieden substituiert, oder fünf- bis sechsgliedrigen stickstoffhaltigen Heteroarylresten, unsubstituiert oder einfach oder mehrfach gleich oder verschieden substituiert, wobei die Substituenten wie oben stehend definiert sind;
R³ C₁-C₁₈-Alkyl, C₂-C₁₈-Alkenyl, mit ein bis 4 isolierten oder konjugierten Doppelbindungen, C₃-C₁₂-Cycloalkyl, C₇-C₁₃-Aralkyl, C₆-C₁₄-Aryl, unsubstituiert oder einfach oder mehrfach gleich oder verschieden substituiert, oder fünf- bis sechsgliedrigen stickstoffhaltigen Heteroaryl-resten, unsubstituiert oder einfach oder mehrfach gleich oder verschieden substituiert, wobei die Substituenten wie oben stehend definiert sind;
wobei räumlich benachbarte Reste R¹ bis R⁴ miteinander zu einem 5- bis 12-gliedrigen Ring verbunden sein können, der seinerseits Substituenten tragen kann, die ausgewählt sind aus C₁-C₈-Alkyl, C₂-C₈-Alkenyl, mit ein bis 4 isolierten oder konjugierten Doppelbindungen, C₃-C₁₂-Cycloalkyl, C₇-C₁₃-Aralkyl oder C₆-C₁₄-Aryl;
L¹ ein organischer oder anorganischer Neutralligand,
R⁵ bis R⁷ jeweils gleich oder verschieden und ausgewählt werden aus Wasserstoff, C₁-C₈-Alkyl, C₃-C₁₂-Cycloalkyl, C₇-C₁₃-Aralkyl oder C₆-C₁₄-Aryl.

2. Komplexverbindungen gemäß Anspruch 1, **dadurch gekennzeichnet, dass** Nu Sauerstoff ist, M aus Ti und Zr gewählt wird, h ungleich 0 und X Halogen ist.

3. Verfahren zur Polymerisation oder Copolymerisation von Olefinen oder von Styrol unter Verwendung von Komplexverbindungen der allgemeinen Formel I a oder I b nach Anspruch 1 bis 2.

4. Verfahren zur Herstellung von Polyolefinwachsen unter Verwendung von Komplexverbindungen der allgemeinen Formel I a oder I b nach Anspruch 1 bis 2 und einem Regler, insbesondere Wasserstoff.

5. Verfahren zur Herstellung von Komplexverbindungen gemäß Anspruch 1 oder 2, **dadurch gekennzeichnet, dass** man einen protonierten Liganden der allgemeinen Formel II 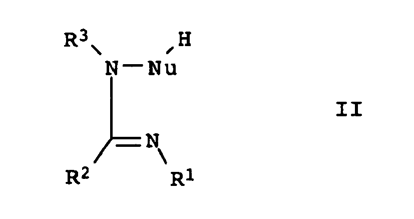 zunächst mit Hilfe einer Base deprotoniert und anschließend mit einer Metallverbindung MX_{y+1} umsetzt, wobei M ausgewählt ist aus Ti, Zr, Hf, V, Nb, Ta, und X Halogen, C₁-C₆-Alkoxy, Acetylacetonat, N(R⁵R⁶), C₁-C₈-Alkyl, C₃-C₁₂-Cycloalkyl, C₇-C₁₃-Aralkyl oder C₆-C₁₄-Aryl bedeutet und wobei MX_{y+1} optional durch anorganische oder organische Neutralliganden stabilisiert werden kann.

6. Verfahren zur Herstellung eines Trägerkatalysators für die Polymerisation oder Copolymerisation von Olefinen, **dadurch gekennzeichnet, dass** man eine oder mehrere Komplexverbindungen nach Anspruch 1 bis 2 und optional einen Aktivator auf einem festen Träger abscheidet.

7. Trägerkatalysator für die Polymerisation oder Copolymerisation von Olefinen, erhältlich nach einem Verfahren gemäß Anspruch 6.

8. Verfahren zur Polymerisation oder Copolymerisation von Olefinen unter Verwendung eines Trägerkatalysators gemäß Anspruch 7.

9. Verfahren zur Emulsionspolymerisation oder -Copolymerisation von Ethylen oder anderen 1-Olefinen und optional weiteren Olefinen unter Verwendung einer Komplexverbindung der allgemeinen Formel I a bis b nach Anspruch 1.

## Claims

1. A complex of the formula I a or I b, 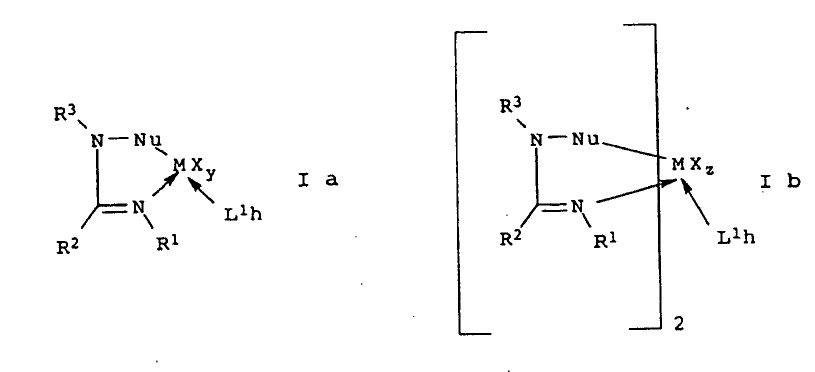 where the variables are defined as follows:
Nu is selected from among O, S, N-R⁴, P-R⁴,
M is selected from among Ti, Zr, Hf, V, Nb, Ta;
h is an integer from 0 to 4;
y corresponds to the oxidation state of M minus 1;
z corresponds to the oxidation state of M minus 2;
X are identical or different and are selected from among halogen, C₁-C₆-alkoxy, acetylacetonate, N (R⁵R⁶), C₁-C₈-alkyl, C₃-C₁₂₋cycloalkyl, C₇-C₁₃-aralkyl and C₆-C₁₄-aryl,
R¹, R⁴ are identical or different and are selected from among
hydrogen,
C₁-C₁₈-alkyl,
C₂-C₁₈-alkenyl, which has from one to 4 isolated or conjugated double bonds;
C₃-C₁₂-cycloalkyl,
C₇-C₁₃-aralkyl,
C₆-C₁₄-aryl, unsubstituted or substituted by one or more identical or different substituents selected from among
C₁-C₁₈-alkyl,
C₂-C₁₈-alkenyl,
C₃-C₁₂-cycloalkyl,
C₇-C₁₃-aralkyl,
C₆-C₁₄-aryl,
halogen,
C₁-C₆-alkoxy,
C₆-C₁₄-aryloxy,
SiR⁵R⁶R⁷ and O-SiR⁵R⁶R⁷;
five- to six-membered nitrogen-containing heteroaryl radicals which may be unsubstituted or substituted by one or more identical or different substituents selected from among
C₁-C₁₈-alkyl,
C₂-C₁₈-alkenyl,
C₃-C₁₂-cycloalkyl,
C₇-C₁₃-aralkyl,
C₆-C₁₄-aryl,
halogen,
C₁-C₆-alkoxy,
C₆-C₁₄-aryloxy,
SiR⁵R⁶R⁷ and O-SiR⁵R⁶R⁷;
R² is C₆-C₁₄-aryl, unsubstituted or substituted by one or more identical or different substituents, or a five- to six-membered nitrogen-containing heteroaryl radical, unsubstituted or substituted by one or more identical or different substituents, where the substituents are as defined above;
R³ is C₁-C₁₈-alkyl, C₂-C₁₈-alkenyl, having from one to 4 isolated or conjugated double bonds, C₃-C₁₂-cycloalkyl, C₇-C₁₃-aralkyl, C₆-C₁₉-aryl, unsubstituted or substituted by one or more identical or different substituents, or a five- to six-membered nitrogen-containing heteroaryl radical, unsubstituted or substituted by one or more identical or different substituents, where the substituents are as defined above;
where adjacent radicals R¹ to R⁴ may be joined to one another to form a 5- to 12-membered ring which may in turn bear substituents selected from among C₁-C₈-alkyl, C₂-C₈₋alkenyl, having from one to 4 isolated or conjugated double bonds, C₃-C₁₂-cycloalkyl, C₇-C₁₃-aralkyl and C₆-C₁₉-aryl;
L¹ is an uncharged, organic or inorganic ligand,
R⁵ to R⁷ are identical or different and are selected from among hydrogen, C₁-C₈-alkyl, C₃₋C₁₂-cycloalkyl, C₇-C₁₃-aralkyl and C₆-C₁₄-aryl.

2. The complex according to claim 1, wherein Nu is oxygen, M is selected from among Ti and Zr, h is not 0 and X is halogen.

3. A process for the polymerization or copolymerization of olefins or of styrene using complexes of the formula I a or I b according to either of claims 1 and 2.

4. A process for preparing polyolefin waxes using complexes of the formula I a or I b according to either of claims 1 and 2 and a regulator, in particular hydrogen.

5. A process for preparing complexes according to either of claims 1 and 2, which comprises firstly deprotonating a protonated ligand of the formula II 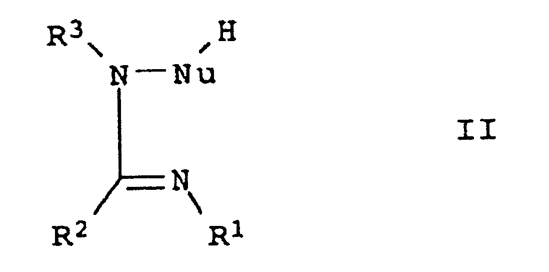 by means of a base and then reacting it with a metal compound MX_{y+1}, where M is selected from among Ti, Zr, Hf, V, Nb, Ta and X is halogen, C₁₋C₆-alkoxy, acetylacetonate, N (R⁵R⁶), C₁-C₈-alkyl, C₃-C₁₂-cycloalkyl, C₇-C₁₃-aralkyl or C₆-C₁₄-aryl and MX_{y+1} may optionally be stabilized by uncharged, inorganic or organic ligands.

6. A process for preparing a supported catalyst for the polymerization or copolymerization of olefins, which comprises depositing one or more complexes according to either of claims 1 and 2 and optionally an activator on a solid support.

7. A supported catalyst for the polymerization or copolymerization of olefins which is obtainable by a process according to claim 6.

8. A process for the polymerization or copolymerization of olefins using a supported catalyst according to claim 7.

9. A process for the emulsion polymerization or copolymerization of ethylene or other 1-olefins and optionally further olefins using a complex of the formulae I a to b according to claim 1.

## Revendications

1. Composés de type complexe de formule générale Ia ou Ib 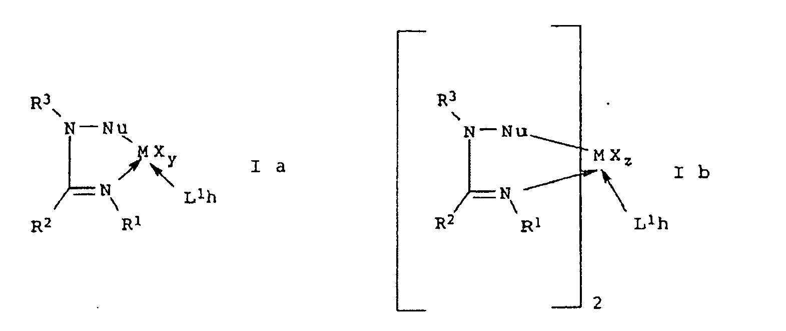 dans lesquelles les variables sont définies comme suit :
Nu est choisi parmi O, S, N-R⁴, P-R⁴,
M est choisi parmi Ti, Zr, Hf, V, Nb, Ta ;
h est un nombre entier allant de 0 à 4 ;
y correspond au nombre d'oxydation de M moins 1 ;
z correspond au nombre d'oxydation de M moins 2 ;
X est identique ou différent et choisi parmi un atome d'halogène, un groupe alcoxy en C₁-C₆, acétylacétonate, N(R⁵R⁶), alkyle en C₁-C₈, cycloalkyle en C₃-C₁₂, aralkyle en C₇-C₁₃ ou aryle en C₆-C₁₄,
R¹ R⁴ sont identiques ou différents et sont choisis parmi
un atome d'hydrogène,
un groupe alkyle en C₁-C₁₈,
un groupe alcényle en C₂-C₁₈ comportant une à 4 doubles liaisons isolées ou conjuguées ;
un groupe cycloalkyle en C₃-C₁₂,
un groupe aralkyle en C₇-C₁₃,
un groupe aryle en C₆-C₁₄ non substitué ou portant un ou plusieurs substituants identiques ou différents choisis parmi des groupes alkyle en C₁-C₁₈,
alcényle en C₂-C₁₈,
cycloalkyle en C₃-C₁₂,
aralkyle en C₇-C₁₃,
aryle en C₆-C₁₄,
des atomes d'halogène,
des groupes alcoxy en C₁-C₆,
aryloxy en C₆-C₁₄,
SiR⁵R⁶R⁷ ou O-SiR⁵R⁶R⁷;
des radicaux hétéroaryle azotés à cinq ou six chaînons, non substitués ou portant un ou plusieurs substituants identiques ou différents choisis parmi
des groupes alkyle en C₁-C₁₈,
alcényle en C₂-C₁₈,
cycloalkyle en C₃-C₁₂,
aralkyle en C₇-C₁₃,
aryle en C₆-C₁₄,
des atomes d'halogène,
des groupes alcoxy en C₁-C₆,
aryloxy en C₆-C₁₄,
SiR⁵R⁶R⁷ ou O-SiR⁵R⁶R⁷;
R² représente un groupe aryle en C₆-C₁₄ non substitué ou portant un ou plusieurs substituants identiques ou différents, ou des radicaux hétéroaryle azotés à cinq ou six chaînons, non substitués ou portant un ou plusieurs substituants identiques ou différents, les substituants étant tels que définis plus haut ;
R³ représente un groupe alkyle en C₁-C₁₈, alcényle en C₂-C₁₈ comportant une à 4 doubles liaisons isolées ou conjuguées, un groupe cycloalkyle en C₃-C₁₂, aralkyle en C₇-C₁₃, aryle en C₆-C₁₄, non substitués ou portant un ou plusieurs substituants identiques ou différents, ou des radicaux hétéroaryle azotés à cinq ou six chaînons, non substitués ou portant un ou plusieurs substituants identiques ou différents, les substituants étant tels que définis plus haut ;
des radicaux R¹ à R⁴ spatialement contigus pouvant être reliés l'un à l'autre en un cycle à 5-12 chaînons, qui pour sa part peut porter des substituants qui sont choisis parmi des groupes alkyle en C₁-C₈, alcényle en C₂-C₈ comportant une à 4 doubles liaisons isolées ou conjuguées, des groupes cycloalkyle en C₃-C₁₂, aralkyle en C₇-C₁₃ ou aryle en C₆-C₁₄ ;
L ¹ représente un ligand neutre organique ou inorganique,
R⁵ à R⁷ sont identiques ou différents et choisis parmi un atome d'hydrogène, des groupes alkyle en C₁-C₈, cycloalkyle en C₃-C₁₂, aralkyle en C₇-C₁₃ et aryle en C₆-C₁₄.

2. Composés de type complexe selon la revendication 1, **caractérisés en ce que** Nu est un atome d'oxygène, M est choisi parmi Ti et Zr, h est différent de 0 et X est un atome d'halogène.

3. Procédé pour la polymérisation ou la copolymérisation d'oléfines ou de styrène avec utilisation de composés de type complexe de formule générale Ia ou Ib selon la revendication 1 ou 2.

4. Procédé pour la préparation de cires polyoléfiniques avec utilisation de composés de type complexe de formule générale Ia ou Ib selon la revendication 1 ou 2 et d'un régulateur, en particulier d'hydrogène.

5. Procédé pour la préparation de composés de type complexe selon la revendication 1 ou 2, **caractérisé en ce que** d'abord on soumet à une déprotonation, à l'aide d'une base, un ligand protoné de formule générale II 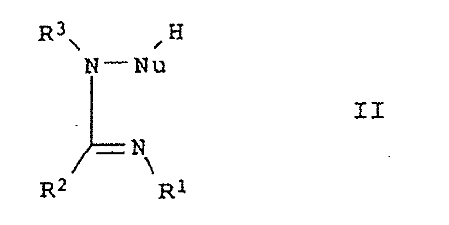 et ensuite on le fait réagir avec un composé métallique MX_{y+1}, M étant choisi parmi Ti, Zr, Hf, V, Nb, Ta et X représentant un atome d'halogène, un groupe alcoxy en C₁-C₆, acétylacétonate, N(R⁵R⁶), alkyle en C₁-C₈, cycloalkyle en C₃-C₁₂, aralkyle en C₇-C₁₃ ou aryle en C₆-C₁₄, et MX_{y+1} pouvant éventuellement être stabilisé par des ligands neutres organiques ou inorganiques.

6. Procédé pour la préparation d'un catalyseur fixé sur support, pour la polymérisation ou la copolymérisation d'oléfines, **caractérisé en ce qu'**on dépose sur un support solide un ou plusieurs composés de type complexe selon les revendications 1 ou 2 et éventuellement un activateur.

7. Catalyseur fixé sur support, pour la polymérisation ou la copolymérisation d'oléfines, pouvant être obtenu conformément à un procédé selon la revendication 6.

8. Procédé pour la polymérisation ou la copolymérisation d'oléfines, avec utilisation d'un catalyseur fixé sur support selon la revendication 7.

9. Procédé pour la polymérisation ou la copolymérisation en émulsion d'éthylène ou d'autres 1-oléfines et éventuellement d'autres oléfines, avec utilisation d'un composé de type complexe de formule générale la ou b selon la revendication 1.
